# EUROPÄISCHE PATENTSCHRIFT

(11) **EP 4 014 329 B1**
(45) Veröffentlichungstag und Bekanntmachung des Hinweises auf die Patenterteilung: **09.10.2024**
(21) Anmeldenummer: 20754736.5
(22) Anmeldetag: 11.08.2020
(51) Int. Cl.: H04B 3/54, B60R 16/023

(54) **ANORDNUNG ZUR INFORMATIONSÜBERTRAGUNG BEI EINER KOMPONENTE EINES FAHRZEUGES**
ARRANGEMENT FOR TRANSMITTING INFORMATION FOR A COMPONENT OF A VEHICLE
AGENCEMENT POUR LA TRANSMISSION D'INFORMATIONS POUR UN COMPOSANT D'UN VÉHICULE

(30) Priorität: 14.08.2019 DE 102019121920
(43) Veröffentlichungstag der Anmeldung: 22.06.2022
(73) Patentinhaber: Huf Hülsbeck & Fürst GmbH & Co. KG, 42551 Velbert (DE)
(72) Erfinder: SIEG, Berthold, 46240 Bottrop (DE)
(74) Vertreter: Bals & Vogel Patentanwälte PartGmbB
(86) Internationale Anmeldenummer: PCT/EP2020/072477
(87) Internationale Veröffentlichungsnummer: WO 2021/028428

(56) Entgegenhaltungen:
- EP-A1- 3 633 866
- US-A1- 2015 247 889

## Beschreibung

Die vorliegende Erfindung betrifft eine Anordnung zur Informationsübertragung bei einer Komponente eines Fahrzeuges. Ferner bezieht sich die Erfindung auf einen Türgriff, ein System sowie ein Verfahren.

Es ist aus dem Stand der Technik bekannt, dass bei Komponenten wie Türgriffen eines Fahrzeuges neben einer Energieversorgung auch eine Kommunikation zwischen einem Steuergerät und einer Türgriffelektronik bereitgestellt wird. Diese Kommunikation dient bspw. dazu, eine Detektionsinformation von einem Sensor des Türgriffes an das Steuergerät weiterzuleiten.

Ebenfalls ist bekannt es, dass für diese Kommunikation nicht dedizierte Leitungen genutzt werden, sondern eine bereits vorhandene Leitung zur Energieversorgung genutzt wird. In diesem Zusammenhang wird auch von einer Powerline-Kommunikation gesprochen.

Allerdings setzt die zuverlässige Kommunikation voraus, dass das über die Leitung ausgegebene Kommunikationssignal bestimmte Anforderungen erfüllt. So kann es erforderlich sein, dass das Kommunikationssignal einer bestimmten Stromstärke entsprechen muss, und davon nur geringfügig abweichen darf. Die Gewährleistung der zuverlässigen Kommunikation ist dabei häufig mit einem höheren technischen Aufwand verbunden.

Die Schrift US 2015/0247889 A1 offenbart ein Sensorsystem mit einer Stromschnittstelle, wobei das System eine Versorgungs- und Stromschnittstelle umfasst. Ferner umfasst das System eine elektronische Steuereinheit, die mit der Versorgungs- und Stromschnittstelle gekoppelt ist, und einen verbesserten Initialisierungssensor, der mit der Versorgungs- und Stromschnittstelle gekoppelt und so konfiguriert ist, dass er gemessene Informationen über die Versorgungs- und Stromschnittstelle an die elektronische Steuereinheit liefert, und der so konfiguriert ist, dass er die Versorgungs- und Stromschnittstelle auf einen geeigneten Strompegel initialisiert, um fehlerhafte Informationen zu vermindern.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte Lösung zur Kommunikation, vorzugsweise zur Ausgabe des Kommunikationssignals bereitzustellen. Hierbei ist es eine weitere optionale Aufgabe, die Stromstärke exakt bestimmen und/oder einstellen zu können.

Die voranstehende Aufgabe wird gelöst durch eine Anordnung mit den Merkmalen des unabhängigen Vorrichtungsanspruchs, einen Türgriff mit den Merkmalen des weiteren unabhängigen Vorrichtungsanspruchs, ein System mit den Merkmalen des unabhängigen Systemanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Anordnung beschrieben sind, selbstverständlich auch im Zusammenhang mit dem erfindungsgemäßen Türgriff, dem erfindungsgemäßen System sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird gelöst durch eine Anordnung, insbesondere Schaltungsanordnung, zur Informationsübertragung bei einer Komponente eines Fahrzeuges.

Hierbei ist insbesondere vorgesehen, dass die Komponente als ein Türgriff, insbesondere Fahrzeugtürgriff, wie bspw. KFZ-Außentürgriff oder KFZ-Innentürgriff, oder ein Stoßfänger oder eine Überwachungsvorrichtung wie ein optischer Sensor des Fahrzeuges ausgebildet ist. Dabei kann eine erfindungsgemäße Anordnung Teil einer Elektronik der Komponente sein, insbesondere eines Sensors, vorzugsweise kapazitiven Sensors, zur Annäherungsdetektion. Die Anordnung ist dabei bspw. als eine Schaltungsanordnung mit wenigstens einem elektronischen Bauelement und/oder integrierten Schaltkreis ausgebildet. Eine Verarbeitungsanordnung und/oder eine Verarbeitungsvorrichtung der Anordnung können dabei ggf. zur Detektion der Annäherung (eines Benutzers an Fahrzeug oder eines Körperteils eines Benutzers an Fahrzeug) genutzt werden, z. B. eine Erfassung einer Sensorelektrode zur Detektion auswerten.

Es kann sich bei der Komponente um eine solche Komponente handeln, welche für die Aktivierung einer Funktion des Fahrzeuges, wie bspw. Verriegeln/Entriegeln und/oder Öffnen/Schließen von Türen oder Klappen, genutzt wird. Hierfür ist bspw. eine Aktivierungshandlung wie eine Annäherung eines Objekts an die Komponente und/oder die Durchführung einer Geste durch das Objekt notwendig. Das Objekt betrifft in diesem Zusammenhang vorzugsweise eine Person und insbesondere ein Körperteil der Person. Die Komponente kann als eine solche Komponente des Fahrzeuges ausgeführt sein, welche primär einem anderen Zweck dient, als der Aktivierung der Funktion. Dies ist bspw. bei dem Türgriff und dem Stoßfänger der Fall. Im Gegensatz dazu kann eine Komponente wie der Sensor dediziert für die Aktivierung der Funktion genutzt werden. Die Funktion ist bspw. ein Entriegeln des Fahrzeuges und/oder eine Initiierung einer Authentifizierung.

Vorteilhaft ist es zudem, wenn das Fahrzeug als ein Kraftfahrzeug, insbesondere als ein Hybridfahrzeug oder als ein Elektrofahrzeug ausgebildet ist, vorzugsweise mit einem Hochvolt-Bordnetz und/oder einem Elektromotor. Außerdem kann es möglich sein, dass das Fahrzeug als ein Brennstoffzellenfahrzeug und/oder Personenkraftfahrzeug und/oder semiautonomes oder autonomes Fahrzeug ausgebildet ist. Vorteilhafterweise weist das Fahrzeug ein Sicherheitssystem auf, welches z. B. durch eine Kommunikation mit einem Identifikationsgeber (ID-Geber) eine Authentifizierung ermöglicht. In Abhängigkeit von der Kommunikation und/oder der Authentifizierung kann wenigstens eine (ggf. weitere) Funktion des Fahrzeuges aktiviert werden. Falls hierzu die Authentifizierung des ID-Gebers notwendig ist, kann es sich bei der Funktion um eine sicherheitsrelevante Funktion handeln, wie ein Entriegeln des Fahrzeuges oder ein Öffnen von Türen/Klappen oder eine Freigabe eines Motorstarts. Somit kann das Sicherheitssystem auch als ein passives Zugangssystem ausgebildet sein, welches ohne aktive manuelle Betätigung des ID-Gebers die Authentifizierung und/oder die Aktivierung der Funktion bei Detektion der Annäherung des ID-Gebers an das Fahrzeug initiiert. Hierzu wird bspw. wiederholt ein Wecksignal durch das Sicherheitssystem ausgesendet, welches durch den ID-Geber bei der Annäherung empfangen werden kann, und dann die Authentifizierung auslöst.

Auch kann die Funktion, welche bevorzugt durch die Komponente (insbesondere bei der Annäherung und/oder Durchführung der Geste an der Komponente) aktiviert wird, eine Aktivierung einer Fahrzeugbeleuchtung und/oder ein Betätigen (Öffnen und/oder Schließen) einer Klappe (z. B. Front- oder Heck- oder Seitenklappe bzw. -tür) betreffen. Bspw. wird automatisch bei der Detektion der Annäherung die Fahrzeugbeleuchtung aktiviert und/oder bei der Detektion der Geste die Klappe betätigt.

Eine erfindungsgemäße Anordnung kann zumindest teilweise auf einer Leiterplatte in der Komponente angeordnet sein. Bspw. umfasst die Anordnung weitere Teilanordnungen, jeweils aufweisend zumindest ein elektronisches Bauelement und/oder zumindest einen integrierten Schaltkreis und/oder zumindest einen Mikrocontroller und/oder Leiterbahnen, um die genannten Teile miteinander zu verbinden. Diese Teilanordnungen können auf der gleichen oder auf unterschiedlichen Leiterplatten befestigt sein.

Die erfindungsgemäße Anordnung weist die nachfolgenden Teilanordnungen auf:
- eine Verarbeitungsanordnung zur Bereitstellung einer Information bei der Komponente, vorzugsweise über eine Detektion einer Aktivierungshandlung wie einer Annäherung an die Komponente und/oder eine Geste, wobei die Information für eine Aktivierung einer Funktion bei dem Fahrzeug spezifisch sein kann,
- eine Schnittstellenanordnung zur Bereitstellung einer elektrischen Versorgungsverbindung mit einer Steuervorrichtung des Fahrzeuges,
- eine Stabilisierungsvorrichtung, welche die Schnittstellenanordnung mit der Verarbeitungsanordnung elektrisch verbindet, um eine Energieversorgung von der Versorgungsverbindung stabilisiert für die Verarbeitungsanordnung bereitzustellen,
- eine Stromkontrollanordnung der Verarbeitungsanordnung, welche mit der Stabilisierungsvorrichtung elektrisch verschaltet, insbesondere verbunden, ist, um die Stabilisierungsvorrichtung zur Ausgabe eines Übertragungssignals an die Schnittstellenanordnung zu verwenden, insbesondere zu aktivieren und/oder anzusteuern, um die bereitgestellte Information über die Versorgungsverbindung an die Steuervorrichtung, insbesondere gemäß einer Powerline-Kommunikation, zu übertragen,
wobei die Stromkontrollanordnung eine Anpassungsanordnung, insbesondere Widerstandsanordnung, und zumindest ein Schaltmittel zum Schalten wenigstens eines elektrischen Stroms zwischen einem Ausgang der Stabilisierungsvorrichtung und der Anpassungsanordnung aufweist, um einen elektrischen Ausgangsstrom am Ausgang angepasst durch die Anpassungsanordnung bereitzustellen, sodass die Stabilisierungsvorrichtung anhand dieses elektrischen Ausgangsstroms das Übertragungssignal entsprechend angepasst über einen Eingang an die Schnittstellenanordnung ausgibt.

Dies hat den Vorteil, dass die Stabilisierungsvorrichtung zur Ausgabe des Übertragungssignals genutzt werden kann, und somit das Übertragungssignal technisch in einfacher Weise und besonders zuverlässig und insbesondere stabilisiert ausgegeben werden kann. Dabei wird die Stabilisierungsvorrichtung zur Ausgabe des Übertragungssignals verwendet, insbesondere aktiviert und/oder angesteuert. Darunter wird insbesondere verstanden, dass über die elektrische Verschaltung, insbesondere elektrische Verbindung, der Stromkontrollanordnung mit der Stabilisierungsvorrichtung ein elektrischer Parameter dieser Verschaltung so angepasst wird, dass die Stabilisierungsvorrichtung veranlasst wird, das Übertragungssignal auszugeben. Dies kann bspw. eine Veränderung der Stromstärke an dieser Verschaltung sein, um das Übertragungssignal auszugeben.

Das Übertragungssignal kann bspw. mittels eines (elektrischen) Kommunikationssignals, insbesondere eines elektrischen Stroms mit einer bestimmten Stromstärke, der Schnittstellenanordnung und/oder Versorgungsverbindung ausgegeben werden. Dabei kann eine Stromrichtung des Kommunikationssignals von der Steuervorrichtung, insbesondere einem Steuergerät des Fahrzeuges, über die Versorgungsverbindung und Schnittstellenanordnung an die Stabilisierungsvorrichtung in Richtung der Verarbeitungsanordnung vorgesehen sein, um die Energieversorgung bereitzustellen. Gleichzeitig kann aber das Übertragungssignal aus Richtung der Verarbeitungsanordnung von der Stabilisierungsvorrichtung über die Schnittstellenanordnung und Versorgungsverbindung an die Steuervorrichtung übertragen werden, also die Richtung der Informationsübertragung umgekehrt von der Verarbeitungsanordnung zur Steuervorrichtung erfolgen. In anderen Worten kann das Übertragungssignal (als der Informationsträger für die bereitgestellte Information) von der Stabilisierungsvorrichtung an die Schnittstellenanordnung und damit über die Versorgungsverbindung an die Steuervorrichtung ausgegeben werden, um die bereitgestellte Information in die entsprechende Richtung an die Steuervorrichtung zu übertragen. Das Übertragungssignal wird z. B. durch eine Anpassung eines Parameters des Kommunikationssignals, wie der Stromstärke, ausgegeben und übertragen. Das Kommunikationssignal kann primär und/oder überwiegend für die Energieversorgung und nur sekundär und/oder unregelmäßig zur Kommunikation, also Ausgabe des Übertragungssignals, genutzt werden.

Die Anordnung kann Teil einer Elektronik der Komponente sein, und somit bspw. als eine Türgriffelektronik ausgebildet sein. Die Anordnung benötigt selbstverständlich eine Energieversorgung. Diese Energieversorgung wird üblicherweise von einer Steuervorrichtung, insbesondere von einem Steuergerät und/oder von einer wiederaufladbaren Batterie des Fahrzeuges, bereitgestellt. Allerdings ist es vorteilhaft, wenn die Energieversorgung, welche durch die Steuervorrichtung bereitgestellt wird, noch durch eine Stabilisierungsvorrichtung wie einen Spannungsregler stabilisiert wird. Der Begriff der Energieversorgung bezieht sich dabei z. B. auf eine elektrische Spannung und/oder einen Strom und/oder eine Leistung, welche durch die Steuervorrichtung an der Schnittstellenanordnung zunächst wenig oder nicht stabilisiert bereitgestellt wird, und anschließend von der Stabilisierungsvorrichtung stabilisiert der Verarbeitungsanordnung zur Verfügung gestellt wird. Die Stabilisierungsvorrichtung hat dabei selbst auch einen Energieverbrauch, sodass ein sehr geringer Teil des Stroms an der Schnittstellenanordnung und damit an einem Eingang der Stabilisierungsvorrichtung für den Betrieb der Stabilisierungsvorrichtung abgezweigt wird, und nicht am Ausgang der Stabilisierungsvorrichtung für die Energieversorgung zur Verfügung steht. Da dieser Teil sehr gering ist, entspricht der Strom am Eingang ungefähr dem Strom am Ausgang.

Die Steuervorrichtung kann insbesondere als ein Steuergerät des Fahrzeuges ausgebildet sein, um anhand der übertragenen Information eine Funktion beim Fahrzeug zu aktivieren. Diese Funktion ist bspw. eine Entriegelung und/oder die Auslösung eines Authentifizierungsvorgangs bei dem Fahrzeug. Bspw. erfolgt dann die Aktivierung der Funktion, sobald das Übertragungssignal ausgegeben wird.

Herkömmlicherweise kann eine Übertragung von Informationen dadurch erfolgen, dass der Strom an der Schnittstellenanordnung und damit der Strom an einer Energieversorgungsleitung der Versorgungsverbindung unmittelbar durch einen elektronischen Schalter (wie einen Transistor) angepasst wird. Dies kann dazu führen, dass zur Übertragung der Information die Stromstärke des Stroms erhöht wird, und anschließend wieder auf ein Niveau verringert wird, welcher zur Energieversorgung ausreicht. Jedoch kann dieser Strom an der Energieversorgungsleitung nur gering oder nicht stabilisiert sein, sodass Schwankungen der Stromstärke sich negativ auf die Übertragung auswirken können. Ferner können sich Abweichungen von der Stromstärke dadurch ergeben, dass ein Spannungsabfall über den elektronischen Schalter zu Schwankungen führt. Insbesondere ist die abfallende Spannung auch temperaturabhängig. Erfindungsgemäß kann hingegen die Stabilisierungsvorrichtung für die Ausgabe des Übertragungssignals, d. h. für die Anpassung des Stroms an der Energieversorgungsleitung, genutzt werden.

Es kann vorgesehen sein, dass die Stabilisierungsvorrichtung in die Komponente integriert ist, bspw. in der Türgriffelektronik integriert ist. Insbesondere ist die Stabilisierungsvorrichtung auf einer gemeinsamen Leiterplatte mit der Verarbeitungsanordnung angeordnet. Die im Rahmen dieser Erfindung beschriebenen elektrischen Verbindungen können dabei zumindest teilweise durch Leiterbahnen dieser Leiterplatte bereitgestellt sein.

Die Energieversorgung kann durch die Stabilisierungsvorrichtung z. B. dadurch stabilisiert werden, dass eine Spannung am Eingang (Eingangsspannung) der Stabilisierungsvorrichtung auf einen vorgegebenen Wert geregelt und als eine Ausgangsspannung an einem Ausgang der Stabilisierungsvorrichtung ausgegeben wird. Dieser vorgegebene Wert kann der Versorgungsspannung für die Verarbeitungsanordnung, insbesondere für eine Verarbeitungsvorrichtung entsprechen. Insbesondere dann, wenn die Eingangsspannung oberhalb der Ausgangsspannung liegt, kann die Stabilisierungsvorrichtung auch als Stromquelle und/oder steuerbare Stromsenke, insbesondere Stromregler, verwendet werden. In diesem Fall kann durch einen Strom am Ausgang der Stabilisierungsvorrichtung ein Strom am Eingang der Stabilisierungsvorrichtung geregelt werden. Somit kann die Stromkontrollanordnung durch eine Anpassung des Stroms am Ausgang den Strom am Eingang beeinflussen, und somit die Ausgabe des Übertragungssignals durch die Stabilisierungsvorrichtung veranlassen und insbesondere ansteuern. Vorzugsweise wenn die Stromkontrollanordnung den Strom am Ausgang über einen definierten Widerstand fließen lässt, kann der Strom am Eingang genau definiert werden. Der Spannungsabfall über den Widerstand kann dabei aufgrund der stabilisierten Ausgangsspannung ebenfalls als definiert angesehen werden. Dies ermöglicht es, von einem Ausgangszustand, in welchem nur die Energieversorgung hergestellt ist, das Übertragungssignal auf die Energieversorgung in definierter Weise aufzuprägen. Auf diese Weise kann die Information als wenigstens oder genau eine 1-Bit Information über die Energieversorgungsleitung übertragen werden. Ein Schutzwiderstand, welcher mit dem Eingang verbunden ist, kann so angepasst sein, dass die Eingangsspannung oberhalb der Ausgangsspannung liegt.

Um die Ausgabe des Übertragungssignal durchzuführen, kann die beschriebene Anpassung des Stroms am Ausgang bevorzugt durch ein Schalten einer Verarbeitungsvorrichtung der Verarbeitungsanordnung bewirkt werden. Hierzu wird bspw. wenigstens ein Schaltmittel in der Form eines Ports der Verarbeitungsvorrichtung, insbesondere Mikrocontrollers, genutzt. Dabei kann es sich zwar um ein langsames Schalten handeln, welches sich nicht zur Übertragung großer Datenmengen eignet. Jedoch kann das Schalten in dieser Weise für die Übertragung der bereitgestellten Information, insbesondere nur über eine Detektion einer Aktivierungshandlung, ausreichend sein. Es kann sich bei der Information also um eine 1-Bit Information handeln, welche lediglich indiziert, dass die Detektion stattgefunden hat. Die Informationsübertragung kann als eine Datenübertragung im Millisekunden-Bereich ausgeführt sein.

Die Stabilisierungsvorrichtung kann als Regler, insbesondere Spannungsregler, ausgebildet sein. Somit kann die Stabilisierungsvorrichtung vorteilhafterweise primär zur Stabilisierung und/oder Regelung einer Versorgungsspannung für die Energieversorgung der Verarbeitungsanordnung, insbesondere Verarbeitungsvorrichtung, dienen. Nur sekundär kann die Stabilisierungsvorrichtung im Rahmen der Erfindung auch zur Ausgabe des Übertragungssignals genutzt werden. Hierzu kann bspw. der Ausgang der Stabilisierungsvorrichtung durch die Stromkontrollanordnung nach einem Referenzpotential insbesondere nach Masse geschaltet werden.

Die erfindungsgemäße Anordnung kann dazu ausgeführt sein, in einem Temperaturbereich von - 40 °C und 105 °C, vorzugsweise - 30 °C und 85 °C betrieben zu werden. Dies ermöglicht bspw. den Einsatz bei einem Fahrzeug.

Es kann vorgesehen sein, dass die Stromkontrollanordnung nicht unmittelbar den Strom an der Schnittstellenanordnung - und damit am Eingang der Stabilisierungsvorrichtung - anpasst, sondern stattdessen den Strom am Ausgang der Stabilisierungsvorrichtung (und damit ohne direkte Kopplung zur Versorgungsverbindung) anpasst. In anderen Worten kann die Stromkontrollanordnung den Strom an einer Energieversorgungsleitung der Versorgungsverbindung mittelbar über die Stabilisierungsvorrichtung anpassen, um das Übertragungssignal an der Energieversorgungsleitung zu erzeugen.

Die Stromkontrollanordnung kann so ausgestaltet sein, dass diese den Strom am Ausgang der Stabilisierungsvorrichtung definiert anpasst. Diese Anpassung wirkt sich durch die Funktion, insbesondere Regelung, der Stabilisierungsvorrichtung ebenfalls auf den Strom am Eingang der Stabilisierungsvorrichtung aus. Da die Spannung am Ausgang (Ausgangsspannung) gemäß dieser Funktion durch die Stabilisierungsvorrichtung stabilisiert ist, kann auch der Strom sehr genau durch die Anpassung der Stromkontrollanordnung definiert werden. In anderen Worten kann die (bereits zur Stabilisierung der Energieversorgung vorhandene) Stabilisierungsvorrichtung genutzt werden, um eingangsseitig bei der Stabilisierungsvorrichtung einen definierten Strom (das Übertragungssignal) für die Übertragung der Information, insbesondere mittels einer Powerline-Kommunikation, zu initiieren (insbesondere zu erzeugen). Die Powerline-Kommunikation bezeichnet dabei eine Informationsübertragung, insbesondere Datenübertragung, über eine elektrische Leitung, welche primär zur Energieversorgung genutzt wird. Bei dieser Leitung kann es sich um eine Energieversorgungsleitung der Versorgungsverbindung handeln.

Die Versorgungsverbindung kann vorteilhafterweise eine Energieversorgungsleitung aufweisen. Zusätzlich kann eine Masseleitung der Versorgungsverbindung vorgesehen sein, um ein Referenzpotential für die Energieversorgung und/oder Kommunikation bereitzustellen. Die Energieversorgungsleitung kann, insbesondere in der Form eines einzigen elektrischen Leiters oder einer Litze oder dergleichen, zur Übertragung eines einzigen elektrischen Signals (zur Kommunikation und/oder Energieversorgung) ausgeführt sein. In anderen Worten kann die Energieversorgungsleitung potentialgleich ausgeführt sein, d. h. gleichzeitig nur ein gleiches elektrisches Potential führen. Das elektrische Signal zur Energieversorgung kann, wenn es sekundär auch zur Ausgabe des Übertragungssignals bzw. zur Übertragung der Information genutzt wird, auch als Kommunikationssignal bezeichnet werden.

Um die Ausgabe des Übertragungssignals zu aktivieren, kann durch die Stromkontrollanordnung die Ausgangsspannung der Stabilisierungsvorrichtung über eine Verarbeitungsvorrichtung wie einen Mikrocontroller und über wenigstens einen definierten Widerstand einer Anpassungsanordnung auf ein Referenzpotential (insbesondere Massepotential) gezogen werden. Da sowohl die Ausgangsspannung als auch der Widerstand sehr genau definiert sein können, ergibt sich hierdurch ein definierter Stromfluss (d. h. mit definierter Stromstärke). Bei diesem Stromfluss handelt es sich um den Ausgangsstrom der Stabilisierungsvorrichtung, welcher jedoch ungefähr dem Eingangsstrom der Stabilisierungsvorrichtung entsprechen kann (da der Stromverlust durch die Stabilisierungsvorrichtung sehr gering sein kann). Der Eingangsstrom kann über eine Energieversorgungsleitung der Versorgungsverbindung zwischen der Steuervorrichtung und der Schnittstellenanordnung bzw. dem Eingang der Stabilisierungsvorrichtung fließen. Durch die Definition der Stromstärke kann ferner das Übertragungssignal bereitgestellt werden.

Im Rahmen der Erfindung kann die Schnittstellenanordnung einen elektrischen Anschluss, aber auch nur einen Teil einer elektrischen Leitung und/oder eines Strompfads, bezeichnen. Im engeren Sinne entspricht die Schnittstellenanordnung dem Eingang der Stabilisierungsvorrichtung, z. B. in der Form des Anschlusses. Im weiteren Sinne sind die Schnittstellenanordnung und der Eingang im gleichen Strompfad angeordnet, wobei zwischen der Schnittstellenanordnung und dem Eingang z. B. ein Schutzwiderstand und/oder eine Diodenanordnung mit wenigstens einer (hochohmigen) Schutzdiode vorgesehen sein kann. Eine Energieversorgungsleitung der Versorgungsverbindung kann mit der Schnittstellenanordnung elektrisch verbunden sein, und somit gleichzeitig primär zur Energieversorgung und sekundär für die Übertragung der Information mittels des Übertragungssignals genutzt werden. Für diese Übertragung, also Kommunikation, kann der elektrische Strom auf der Energieversorgungsleitung in einen vorgegebenen Bereich erhöht werden, welcher nur eine geringe Toleranz (wenige mA) erlaubt. Ein typischer Strombereich liegt bspw. zwischen 18 und 24 mA. Diese Erhöhung des elektrischen Stroms kann durch die definierte Anpassung mittels der Stromkontrollanordnung erzielt werden, und dann vorliegen, wenn das Übertragungssignal über die Energieversorgungsleitung ausgegeben wird. Das Übertragungssignal entspricht somit dem Strom auf der Energieversorgungsleitung und/oder der Erhöhung. Die Energieversorgungsleitung ist z. B. als eine einzige elektrische Leitung, d. h. als ein einziger Strompfad, ausgeführt.

Auch ist es optional denkbar, dass die Stabilisierungsvorrichtung als ein Spannungsregler ausgeführt ist, und über einen Eingang mit der Schnittstellenanordnung (und ggf. darüber mit einer Energieversorgungsleitung und/oder der Steuervorrichtung) und über einen Ausgang mit der Verarbeitungsanordnung verbunden ist, um eine Eingangsspannung von der Versorgungsverbindung am Eingang in eine stabilisierte Ausgangsspannung für die Energieversorgung der Verarbeitungsanordnung am Ausgang zu übertragen, insbesondere umzuwandeln. Dies ermöglicht es, die Eingangsspannung nicht unmittelbar, sondern stabilisiert für die Energieversorgung zu nutzen. Die Eingangsspannung kann dabei einer elektrischen Spannung an einer Energieversorgungsleitung entsprechen oder davon abhängig sein, letzteres insbesondere dann, wenn die Energieversorgungsleitung über wenigstens ein weiteres Bauelement wie einen Schutzwiderstand mit dem Eingang verbunden ist.

Es ist ferner vorgesehen, dass die Stromkontrollanordnung eine Anpassungsanordnung, insbesondere Widerstandsanordnung, und zumindest ein Schaltmittel zum Schalten wenigstens eines elektrischen Stroms (nachfolgend auch als Übertragungsstrom bezeichnet) zwischen einem Ausgang der Stabilisierungsvorrichtung und der Anpassungsanordnung aufweist, um einen elektrischen Ausgangsstrom am Ausgang angepasst durch die Anpassungsanordnung bereitzustellen, sodass die Stabilisierungsvorrichtung anhand dieses elektrischen Ausgangsstroms das Übertragungssignal entsprechend angepasst über einen Eingang der Stabilisierungsvorrichtung an die Schnittstellenanordnung ausgibt. Dies hat den Vorteil, dass das Übertragungssignal genau definiert und damit besonders stabil zur Übertragung der bereitgestellten Information genutzt werden kann.

Ein Ausgangsstrom am Ausgang der Stabilisierungsvorrichtung kann dabei einen Gesamtstrom bezeichnen, welcher im Strompfad unmittelbar am Ausgang vorliegt. Ein Teil dieses Gesamtstroms kann dann in der Form des Übertragungsstroms zwischen dem Ausgang der Stabilisierungsvorrichtung und der Anpassungsanordnung weitergeleitet werden. Ein weiterer Teil (oder auch der restliche und/oder überwiegende Teil) kann für die Energieversorgung als Versorgungsstrom genutzt werden. Insbesondere wird der Übertragungsstrom nur dann weitergeleitet, also z. B. durch das Schaltmittel geschaltet, wenn das Übertragungssignal aktiviert wird, d. h. ausgegeben werden soll. Der Versorgungsstrom kann durch die stabilisierte Ausgangsspannung am Ausgang (insbesondere geregelt durch die Stabilisierungsvorrichtung) unverändert bleiben. Es kann in diesem Fall die erfindungsgemäße Anordnung so ausgeführt sein, dass eine Steigerung des Gesamtstroms eintritt, welche somit zur Erhöhung der Stromstärke führt. Diese Erhöhung der Stromstärke kann sich in entsprechender Weise auf den Eingangsstrom am Eingang der Stabilisierungsvorrichtung auswirken, und somit das Übertragungssignal bilden.

Es ist denkbar, dass die Stromkontrollanordnung, ggf. in Verbindung mit der Stabilisierungsvorrichtung, einer steuerbaren Stromsenke entspricht. Diese Stromsenke kann z. B. durch das Schalten des wenigstens einen Schaltmittels gesteuert werden, um zur Ausgabe des Übertragungssignals einen definierten Strom aufzunehmen. Dieser aufgenommene Strom kann als das Übertragungssignal verstanden werden, insbesondere wenn dieser Strom eine definierte Stromstärke aufweist. Die Stromstärke wird bspw. dadurch stabilisiert und/oder definiert, dass die Stabilisierungsvorrichtung eine stabilisierte und/oder definierte Ausgangsspannung am Ausgang ausgibt, und die Stromstärke abhängig ist von der Ausgangsspannung und der Anpassungsanordnung. Bspw. bildet hierzu ein jeweiliger Widerstand der Anpassungsanordnung eine Masche mit dem Ausgang. Dabei kann das wenigstens eine Schaltmittel so mit dem Ausgang verschaltet sein, dass das Schaltmittel einen Stromfluss (Übertragungsstrom) zwischen dem Ausgang und der Anpassungsanordnung schaltet, um durch dieses Schalten die Stromsenke zu steuern. Dieses Steuern der Stromsenke kann dem Verwenden, insbesondere Aktivieren und/oder Ansteuern, der Stabilisierungsvorrichtung zur Ausgabe des Übertragungssignals entsprechen.

Es ist ferner denkbar, dass die Stromkontrollanordnung wenigstens eine Verarbeitungsvorrichtung, insbesondere einen Mikrocontroller, und eine Anpassungsanordnung, insbesondere Widerstandsanordnung, aufweist, um für ein Schalten eines elektrischen Stroms (insbesondere Übertragungsstroms) zwischen einem Ausgang der Stabilisierungsvorrichtung und der Anpassungsvorrichtung den Ausgang elektrisch über die Anpassungsanordnung mit einem Referenzpotential zu verbinden, um insbesondere am Ausgang einen elektrischen Ausgangsstrom angepasst, vorzugsweise definiert, zumindest durch die Anpassungsanordnung bereitzustellen, sodass die Stabilisierungsvorrichtung anhand dieses elektrischen Ausgangsstroms das Übertragungssignal über einen Eingang der Stabilisierungsvorrichtung an die Schnittstellenanordnung ausgibt, sodass das Übertragungssignal ebenfalls zumindest durch die Anpassungsanordnung angepasst, insbesondere definiert, ist, vorzugsweise sodass das Übertragungssignal für eine definierte Stromstärke am Eingang spezifisch ist. Auch die Energieversorgung kann dabei einen Versorgungsstrom nutzen, welcher vom Ausgang an das Referenzpotential geleitet wird.

Um die Ausgabe des Übertragungssignals weiter zu verbessern, können ggf. auch mehrere Schaltmittel parallel mit der Anpassungsanordnung, insbesondere Widerstandsanordnung, und/oder dem Ausgang der Stabilisierungsvorrichtung verschaltet sein. Entsprechend können diese Schaltmittel gleichzeitig geschaltet werden, um das Übertragungssignal auszugeben. Die Schaltmittel, insbesondere Ports einer Verarbeitungsvorrichtung, können auch elektrisch miteinander verbunden sein, um parallel den Strom (Übertragungsstrom) vom Ausgang über wenigstens einen (insbesondere jeweils einen) Widerstand der Anpassungsanordnung auf das Referenzpotential zu leiten. Dies hat den Vorteil, dass die Auswirkung des Innenwiderstands, welcher durch die Schaltmittel vorliegt, durch die Parallelschaltung verringert werden kann. Die Schaltmittel können z. B. als Treiberstufe in der Verarbeitungsvorrichtung ausgebildet sein. Der wenigstens eine definierte Widerstand der Anpassungsanordnung kann z. B. in Abhängigkeit von dem Schaltmittel definiert werden.

Des Weiteren ist es im Rahmen der Erfindung optional möglich, dass die Stabilisierungsvorrichtung über einen Eingang mit der Schnittstellenanordnung und über einen Ausgang mit der Verarbeitungsanordnung elektrisch verbunden ist, insbesondere um eine Eingangsspannung von der Versorgungsverbindung am Eingang in eine stabilisierte Ausgangsspannung für die Energieversorgung der Verarbeitungsanordnung am Ausgang zu übertragen. Diese elektrische Verbindung kann auch dazu verwendet werden, um definiert durch einen elektrischen Ausgangsstrom (Gesamtstrom) am Ausgang einen für das Übertragungssignal spezifischen elektrischen Strom am Eingang bereitzustellen. Dabei kann die Stromkontrollanordnung wenigstens eine Verarbeitungsvorrichtung und eine Anpassungsanordnung, insbesondere Widerstandsanordnung, aufweisen, um initiiert durch die Verarbeitungsvorrichtung den Ausgang elektrisch über die Anpassungsanordnung mit einem Referenzpotential zu verbinden, um den elektrischen Ausgangsstrom definiert anhand der Anpassungsanordnung und der Ausgangsspannung bereitzustellen, sodass insbesondere die Stabilisierungsvorrichtung definiert durch diesen elektrischen Ausgangsstrom das Übertragungssignal am Eingang für die Schnittstellenanordnung (und damit auch für die Steuervorrichtung) ausgibt, sodass das Übertragungssignal ebenfalls anhand der Anpassungsanordnung und der Ausgangsspannung definiert sein kann. Somit ist eine technisch einfache und genaue Festlegung des Übertragungssignals möglich.

Zudem ist im Rahmen der Erfindung denkbar, dass die Stabilisierungsvorrichtung dazu ausgeführt ist, aktiviert durch die Stromkontrollanordnung über die Schnittstellenanordnung das Übertragungssignal für eine Powerline-Kommunikation (insbesondere mit der Steuervorrichtung) an eine Energieversorgungsleitung der Versorgungsverbindung auszugeben. Somit kann die Energieversorgungsleitung, also auch ein gleiches elektrisches Signal an der Energieversorgungsleitung, sowohl für die Energieversorgung als auch für die Kommunikation genutzt werden. Dieses elektrische Signal zur Energieversorgung kann somit auch als Kommunikationssignal verstanden werden, und damit gleichzeitig für verschiedene Funktionen genutzt werden.

Nach einer weiteren Möglichkeit kann vorgesehen sein, dass die Stabilisierungsvorrichtung dazu ausgeführt ist, das Übertragungssignal stabilisiert an einem Eingang auszugeben, insbesondere gemäß der und/oder in gleicher Weise zur Stabilisierung der Energieversorgung, vorzugsweise der Stabilisierung einer Ausgangsspannung zur Energieversorgung der Verarbeitungsanordnung an einem Ausgang der Stabilisierungsvorrichtung. Somit kann die Kommunikation deutlich zuverlässiger erfolgen.

Optional kann es vorgesehen sein, dass die Stromkontrollanordnung eine Verarbeitungsvorrichtung und eine Anpassungsanordnung in der Form einer Widerstandsanordnung aufweist, wobei die Widerstandsanordnung wenigstens einen Widerstand aufweist, welcher (ggf. jeweils) in (wenigstens) einen Strompfad mit (wenigstens) einem Schaltmittel der Verarbeitungsvorrichtung integriert ist, um geschaltet durch das Schaltmittel das Übertragungssignal zu definieren. Insbesondere kann dabei durch das Schaltmittel jeweils ein Übertragungsstrom in dem zugehörigen Strompfad geschaltet werden. Dies ermöglicht eine technisch einfache Ansteuerung der Kommunikation.

Gemäß einer vorteilhaften Weiterbildung der Erfindung kann vorgesehen sein, dass die Stromkontrollanordnung wenigstens ein Schaltmittel, insbesondere eine Verarbeitungsvorrichtung mit dem wenigstens einen Schaltmittel, aufweist, wobei das wenigstens eine Schaltmittel mit der Stabilisierungsvorrichtung verschaltet ist, um durch ein Schalten des Schaltmittels die Stabilisierungsvorrichtung zur Ausgabe des Übertragungssignals an die Schnittstellenanordnung zu verwenden, insbesondere zu aktivieren, wobei vorzugsweise die Verarbeitungsvorrichtung parallel zu dem wenigstens einen Schaltmittel mit der Stabilisierungsvorrichtung verschaltet ist, um durch die Energieversorgung betrieben zu werden. Dies ermöglicht eine technisch einfache Ansteuerung der Kommunikation. Insbesondere kann dabei durch das wenigstens eine Schaltmittel jeweils ein Übertragungsstrom geschaltet werden.

Des Weiteren ist es denkbar, dass die Stromkontrollanordnung mindestens zwei Schaltmittel aufweist, insbesondere eine Verarbeitungsvorrichtung mit den mindestens zwei Schaltmitteln aufweist, wobei die Schaltmittel jeweils in einen Strompfad mit wenigstens einem jeweiligen Widerstand einer Anpassungsanordnung integriert sein können, um durch ein gemeinsames und insbesondere zeitgleiches Schalten der Schaltmittel die Stabilisierungsvorrichtung zur Ausgabe des Übertragungssignals an die Schnittstellenanordnung zu verwenden, insbesondere zu aktivieren, und/oder um das Übertragungssignal durch die Widerstände gemeinsam zu definieren. Somit kann eine Beeinflussung dieser Definition durch die Innenwiderstände der Schaltmittel verringert werden.

Es kann optional möglich sein, dass ein Ausgang der Stabilisierungsvorrichtung elektrisch verbunden ist
- mit einer Verarbeitungsvorrichtung der Verarbeitungsanordnung, um einen Ausgangsstrom (Gesamtstrom) am Ausgang zumindest teilweise für die Energieversorgung der Verarbeitungsvorrichtung bereitzustellen, und auch
- mit einer Anpassungsanordnung und wenigstens einem Schaltmittel der Stromkontrollanordnung, um den Ausgangsstrom am Ausgang definiert für die Übertragung der bereitgestellten Information anzupassen, um das Übertragungssignal auszugeben.

Die Verarbeitungsanordnung kann dabei optional das wenigstens eine Schaltmittel aufweisen, und somit auch Teil der Stromkontrollanordnung sein. Dies ermöglicht eine einfache und zuverlässige Steuerung der Kommunikation.

Von weiterem Vorteil kann vorgesehen sein, dass die Stabilisierungsvorrichtung dazu ausgeführt ist, einen elektrischen Strom an einem Eingang der Stabilisierungsvorrichtung überwiegend als einen elektrischen Ausgangsstrom an einem Ausgang der Stabilisierungsvorrichtung bereitzustellen, sodass eine Anpassung des Ausgangsstroms durch die Stromkontrollanordnung den Strom am Eingang überwiegend in gleicher Weise anpasst, sodass der Strom das Übertragungssignal bildet. Damit kann sehr genau durch die Anpassung definiert werden, in welcher Weise das Übertragungssignal ausgegeben wird, und somit auch über die Versorgungsverbindung durch die Steuervorrichtung empfangen und ausgewertet werden kann.

Ferner ist es optional vorgesehen, dass die Verarbeitungsanordnung für die Bereitstellung und insbesondere Generierung der Information eine Verarbeitungsvorrichtung aufweist, wobei die Verarbeitungsanordnung dazu ausgeführt ist, bei der Ausgabe des Übertragungssignals einen Energieverbrauch der Verarbeitungsvorrichtung konstant zu halten, und/oder eine Taktfrequenz der Verarbeitungsvorrichtung konstant zu halten, um den Energieverbrauch der Verarbeitungsvorrichtung zu stabilisieren. Außerhalb der Ausgabe des Übertragungssignals kann hingegen die Taktfrequenz regelmäßig verringert werden, um den Energieverbrauch der Verarbeitungsvorrichtung (während des Betriebs der Anordnung) zu reduzieren. Damit kann eine weitere Maßnahme zur Verringerung einer Schwankung des elektrischen Stroms am Eingang der Stabilisierungsvorrichtung bei Ausgabe des Übertragungssignals bereitgestellt werden. Diese Maßnahme kann somit die Definition der Taktfrequenz der Verarbeitungsvorrichtung betreffen. Bspw. kann bei Ausgabe des Übertragungssignals die Taktfrequenz auf einen konstanten Wert gehalten werden, um den Energieverbrauch der Verarbeitungsvorrichtung währenddessen ebenfalls konstant zu halten. Außerdem kann die Verarbeitungsanordnung dazu ausgeführt sein, außerhalb der Ausgabe des Übertragungssignals die Taktfrequenz der Verarbeitungsvorrichtung regelmäßig auf einen niedrigeren Wert umzuschalten, um den Energieverbrauch zu senken.

Ebenfalls Gegenstand der Erfindung ist ein Türgriff für ein Fahrzeug mit einer erfindungsgemäßen Anordnung zur Informationsübertragung bei dem Türgriff aufweisend:
- eine Verarbeitungsanordnung zur Bereitstellung einer Information bei dem Türgriff, vorzugsweise über eine Detektion einer Aktivierungshandlung bei dem Türgriff, wie einer Annäherung an den Türgriff und/oder einer Geste,
- eine Schnittstellenanordnung zur Bereitstellung einer elektrischen Versorgungsverbindung mit einer Steuervorrichtung des Fahrzeuges,
- eine Stabilisierungsvorrichtung, welche die Schnittstellenanordnung mit der Verarbeitungsanordnung elektrisch verbindet, um eine Energieversorgung von der Versorgungsverbindung stabilisiert für die Verarbeitungsanordnung bereitzustellen,
- eine Stromkontrollanordnung der Verarbeitungsanordnung, welche mit der Stabilisierungsvorrichtung elektrisch verbunden ist, um die Stabilisierungsvorrichtung zur Ausgabe eines Übertragungssignals an die Schnittstellenanordnung zu verwenden, insbesondere zu aktivieren, um die bereitgestellte Information über die Versorgungsverbindung an die Steuervorrichtung zu übertragen.

Damit bringt der erfindungsgemäße Türgriff die gleichen Vorteile mit sich, wie sie ausführlich mit Bezug auf eine erfindungsgemäße Anordnung beschrieben worden sind. Es kann sich bei dem Türgriff z. B. um einen Außentürgriff des Fahrzeuges handeln, um anhand der Information (d. h. bei erfolgreicher Detektion) eine Funktion des Fahrzeuges zu aktivieren. Diese Funktion ist bspw. ein Entriegeln des Fahrzeuges und/oder ein Öffnen einer Fahrzeugtür, an welcher der Türgriff angeordnet sein kann.

Ebenfalls Gegenstand der Erfindung ist ein System für ein Fahrzeug, aufweisend wenigstens zwei Komponenten, insbesondere jeweils in der Form eines erfindungsgemäßen Türgriffs, und jeweils mit einer erfindungsgemäßen Anordnung ausgeführt. In anderen Worten ist es denkbar, dass bei dem erfindungsgemäßen System mehrere erfindungsgemäße Anordnungen vorgesehen sind, welche jeweils als Teil einer jeweiligen Komponente ausgeführt sind. Somit können mehrere Komponenten des Fahrzeuges vorgesehen sein, welche mit wenigstens einer oder genau einer Steuervorrichtung wie einer Fahrzeugelektronik kommunizieren.

Auch hierbei ist es möglich, dass jeweils zur Kommunikation die Information mittels eines jeweiligen Übertragungssignal übertragen wird. Wenn mehrere Komponenten vorgesehen sind, müssen jedoch die Übertragungssignale der verschiedenen Komponenten bzw. der verschiedenen Anordnungen der Komponenten unterschieden werden können. Hierzu können mehrere Strombereiche vorgesehen sein, welche für die unterschiedlichen Komponenten spezifisch sind. Abhängig davon, in welchem Strombereich ein Übertragungssignal liegt, kann dieses einer bestimmten Komponente zugeordnet werden.

Die Strombereiche können jeweils einem Bereich einer Stromstärke entsprechen, innerhalb welchem das Übertragungssignal variieren darf, um der Komponente dieses Strombereichs zugeordnet werden zu können. Damit also eine zuverlässige Zuordnung eines Übertragungssignals zu einer Komponente möglich ist, muss das Übertragungssignal stabil mit einer bestimmten Stromstärke ausgegeben werden. Wenn das Übertragungssignal bspw. eine Detektion der Aktivierungshandlung indiziert, kann durch eine Auswertung der Stromstärke des Übertragungssignals durch die Steuervorrichtung festgestellt werden, bei welcher Komponente die Aktivierungshandlung detektiert wurde (also die Komponente identifiziert werden). Die Einstellung der Stromstärke des Übertragungssignals kann jeweils durch die jeweilige Stromkontrollanordnung der jeweiligen Anordnung erfolgen. In anderen Worten definiert die Stromkontrollanordnung, welche Komponente anhand des Übertragungssignals identifiziert wird, insbesondere durch die Festlegung des Widerstands der jeweiligen Widerstandsanordnung.

Bei einem erfindungsgemäßen System kann es somit vorgesehen sein, dass die jeweilige Stromkontrollanordnung dazu ausgeführt ist, die damit verbundene Stabilisierungsvorrichtung zur Ausgabe des Übertragungssignals mit einer jeweils für die Komponente vorgegebene Stromstärke zu verwenden, insbesondere zu aktivieren, wobei sich die Stromstärken für verschiedene der Komponenten voneinander unterscheiden, um die Übertragungssignale der verschiedenen Komponenten bei der Steuervorrichtung voneinander zu unterscheiden. Auch hierbei kommt es auf die Stabilität des Übertragungssignals an. Damit bringt das erfindungsgemäße System die gleichen Vorteile mit sich, wie sie ausführlich mit Bezug auf eine erfindungsgemäße Anordnung beschrieben worden sind. Zudem können die Anordnungen des Systems jeweils als die erfindungsgemäße Anordnung ausgebildet sein.

Ebenfalls Gegenstand der Erfindung ist ein Verfahren zur Informationsübertragung bei einer Komponente eines Fahrzeuges durch eine erfindungsgemäße Anordnung.

Hierbei ist vorgesehen, dass die nachfolgenden Schritte durchgeführt werden, vorzugsweise nacheinander in der angegebenen oder in beliebiger Reihenfolge, wobei einzelne der Schritte ggf. auch wiederholt durchgeführt werden können:
- Bestimmen einer Information bei der Komponente durch eine Verarbeitungsanordnung der Komponente, vorzugsweise einer Information über eine Detektion einer Aktivierungshandlung wie einer Annäherung an die und/oder Geste bei der Komponente, insbesondere um die Information bereitzustellen,
- Bereitstellen einer elektrischen Versorgungsverbindung von einer Steuervorrichtung des Fahrzeuges an eine Schnittstellenanordnung der Komponente,
- Stabilisieren einer Energieversorgung von der Versorgungsverbindung für die Verarbeitungsanordnung durch eine Stabilisierungsvorrichtung, wobei die Stabilisierungsvorrichtung die Schnittstellenanordnung mit der Verarbeitungsanordnung elektrisch verbinden kann, um insbesondere die stabilisierte Energieversorgung bei der Verarbeitungsanordnung bereitzustellen,
- Verwenden, insbesondere Aktivieren und/oder Ansteuern, der Stabilisierungsvorrichtung zur Ausgabe eines Übertragungssignals an die Schnittstellenanordnung - und darüber an die Versorgungsverbindung - durch eine Stromkontrollanordnung der Verarbeitungsanordnung, welche hierzu mit der Stabilisierungsvorrichtung elektrisch verbunden ist, um die Information über die Versorgungsverbindung an die Steuervorrichtung zu übertragen.

Damit bringt das erfindungsgemäße Verfahren die gleichen Vorteile mit sich, wie sie ausführlich mit Bezug auf eine erfindungsgemäße Anordnung und/oder ein erfindungsgemäßes System und/oder einen erfindungsgemäßen Türgriff beschrieben worden sind. Zudem kann das Verfahren geeignet sein, eine erfindungsgemäße Anordnung und/oder ein erfindungsgemäßes System und/oder einen erfindungsgemäßen Türgriff zu betreiben.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht eines Fahrzeuges mit einem erfindungsgemäßen Türgriff und der erfindungsgemäßen Anordnung,
- Figur 2-6: schematische Darstellungen einer erfindungsgemäßen Anordnung,
- Figur 7: eine schematische Darstellung zur Visualisierung eines erfindungsgemäßen Verfahrens, und eines dabei ausgegebenen Übertragungssignals,
- Figur 8: eine schematische Darstellung eines erfindungsgemäßen Systems.

In den nachfolgenden Figuren werden für die gleichen technischen Merkmale auch von unterschiedlichen Ausführungsbeispielen die identischen Bezugszeichen verwendet.

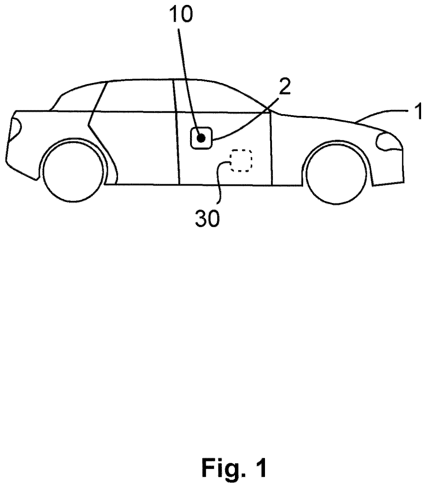

In Figur 1 ist ein Türgriff 2 für ein Fahrzeug 1 dargestellt, wobei das Fahrzeug 1 in einer seitlichen Ansicht gezeigt ist. Der Türgriff 2 kann eine erfindungsgemäße Anordnung 10 aufweisen, welche elektrisch über eine Steuervorrichtung 30 mit Energie versorgt wird. Konkret kann dabei die Steuervorrichtung 30 die Energieversorgung für die Anordnung 10 über eine Versorgungsverbindung bereitstellen, wie im Folgenden noch weiter erläutert wird. Ferner ist es vorgesehen, dass die Anordnung 10 über die Energieversorgung bzw. über die Versorgungsverbindung eine Information über eine Aktivierungshandlung bei dem Türgriff 2 an die Steuervorrichtung 30 überträgt. Diese Aktivierungshandlung ist z. B. eine Annäherung an den Türgriff 2 und/oder eine Geste im Bereich vor dem Türgriff 2, um eine Funktion bei dem Fahrzeug 1 wie ein Entriegeln und/oder eine Authentifizierung auszulösen.

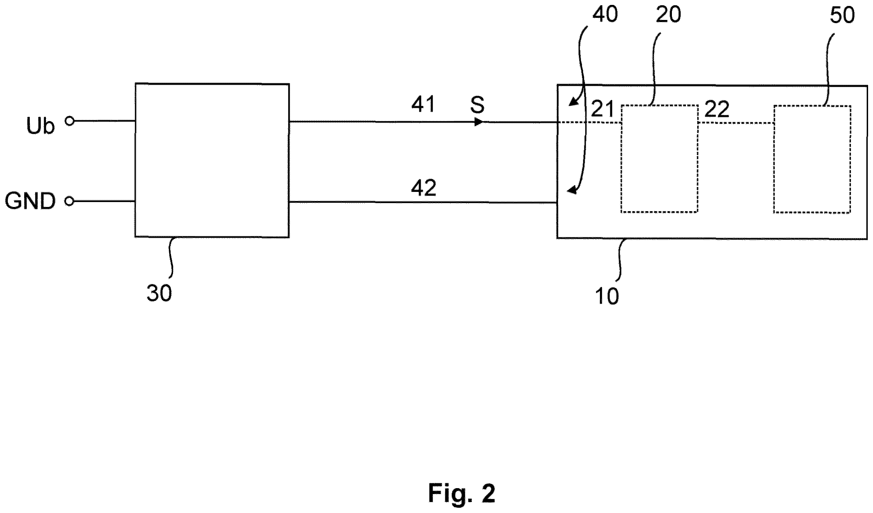

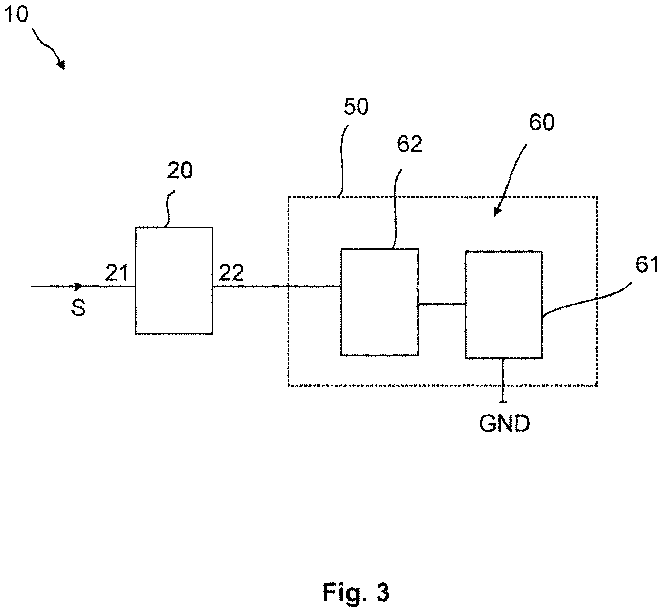

In den Figur 2 bis 6 ist eine erfindungsgemäße Anordnung 10 zur Informationsübertragung bei einer Komponente 2 eines Fahrzeuges 1 gezeigt. Die Komponente 2 entspricht bspw. dem vorgenannten Türgriff 2. Die Anordnung 10 kann eine Verarbeitungsanordnung 50 zur Bereitstellung einer Information bei der Komponente 2, vorzugsweise über eine Detektion einer Aktivierungshandlung, wie einer Annäherung an die Komponente 2, aufweisen. Außerdem kann die Anordnung 10 eine Schnittstellenanordnung 40 zur Bereitstellung einer elektrischen Versorgungsverbindung mit einer Steuervorrichtung 30 des Fahrzeuges 1 aufweisen. Die Schnittstellenanordnung 40 kann z. B. eine elektrische Steckverbindung oder einen elektrischen Anschluss oder dergleichen umfassen. Ferner kann die Anordnung 10 eine Stabilisierungsvorrichtung 20 umfassen, welche die Schnittstellenanordnung 40 mit der Verarbeitungsanordnung 50 elektrisch verbindet, um eine (bzw. die) Energieversorgung von der Versorgungsverbindung stabilisiert für die Verarbeitungsanordnung 50 bereitzustellen. Darüber hinaus kann eine in den Figuren 3 bis 6 gezeigte Stromkontrollanordnung 60 der Verarbeitungsanordnung 50 vorgesehen sein, welche mit der Stabilisierungsvorrichtung 20 elektrisch verbunden ist, um die Stabilisierungsvorrichtung 20 zur Ausgabe eines Übertragungssignals S an die Schnittstellenanordnung 40 zu verwenden, insbesondere zu aktivieren, um die bereitgestellte Information über die Versorgungsverbindung an die Steuervorrichtung 30 zu übertragen. Das Übertragungssignal S kann dabei als ein Informationsträger für die bereitgestellte Information über die Schnittstellenanordnung 40 weiter an die Versorgungsverbindung und an die Steuervorrichtung 30 ausgegeben werden. Konkret kann, wie in Figur 2 gezeigt ist, das Übertragungssignal S über eine Energieversorgungsleitung 41 der Versorgungsverbindung an die Steuervorrichtung 30 übertragen werden. Die Steuervorrichtung 30, wie ein Steuergerät 30 des Fahrzeuges 1, kann das Übertragungssignal S detektieren, um eine Funktion für das Fahrzeug 1 zu aktivieren.

Die Stabilisierungsvorrichtung 20 kann als ein Spannungsregler 20 ausgeführt sein, und über einen Eingang 21 mit der Schnittstellenanordnung 40 und über einen Ausgang 22 mit der Verarbeitungsanordnung 50 verbunden sein, um eine Eingangsspannung von der Versorgungsverbindung am Eingang 21 in eine stabilisierte Ausgangsspannung für die Energieversorgung der Verarbeitungsanordnung 50 am Ausgang 22 zu übertragen.

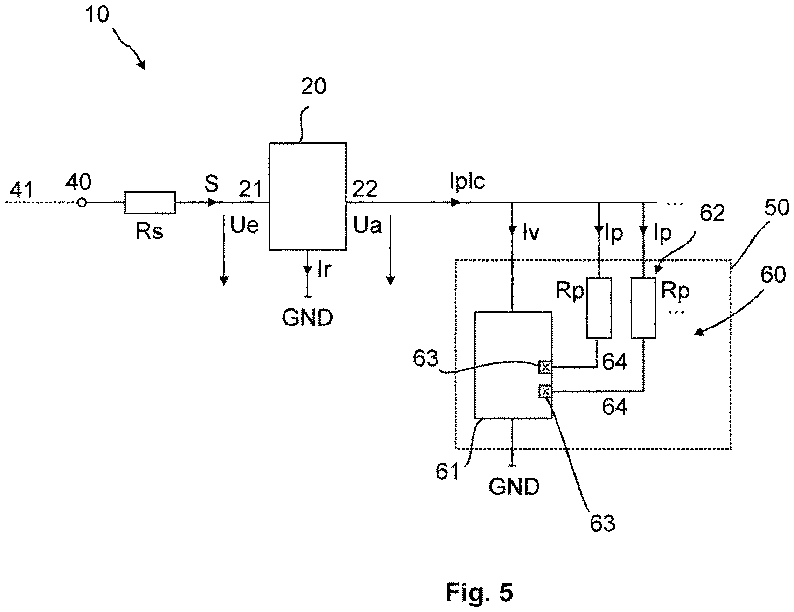

Wie in Figur 5 gezeigt ist, kann die Stromkontrollanordnung 60 eine Anpassungsanordnung 62, insbesondere Widerstandsanordnung 62, und zumindest ein Schaltmittel 63 zum Schalten wenigstens eines elektrischen Stroms Ip zwischen einem Ausgang 22 der Stabilisierungsvorrichtung 20 und der Anpassungsanordnung 62 aufweisen, um einen elektrischen Ausgangsstrom Iplc am Ausgang 22 angepasst durch die Anpassungsanordnung 62 bereitzustellen, sodass die Stabilisierungsvorrichtung 20 anhand dieses elektrischen Ausgangsstroms Iplc das Übertragungssignal S entsprechend angepasst über einen Eingang 21 an die Schnittstellenanordnung 40 ausgibt. Der elektrische Strom Ip, auch Übertragungsstrom Ip bezeichnet, kann dabei mit dem Ausgangsstrom Iplc in Beziehung stehen. Insbesondere ist der Ausgangsstrom Iplc ein Gesamtstrom Iplc, welcher sich zumindest teilweise aus dem (wenigstens einen) Übertragungsstrom Ip und dem Versorgungsstrom Iv ergibt. Somit ist die Stromkontrollanordnung 60 über die Anpassungsanordnung 62 und das Schaltmittel 63 in der Lage, über die Steuerung des Übertragungsstroms Ip auch den Ausgangsstrom Iplc zu beeinflussen.

In Figur 2 ist gezeigt, dass die Stabilisierungsvorrichtung 20 über den Eingang 21 mit der Schnittstellenanordnung 40 und über den Ausgang 22 mit der Verarbeitungsanordnung 50 elektrisch verbunden ist. Die Steuervorrichtung 30 kann dazu ausgeführt sein, von einer Batteriespannung Ub eine Spannung über eine Energieversorgungsleitung 41 auszugeben. Ferner kann die Steuervorrichtung 30 ein Massepotential GND über eine Masseleitung 42 bereitstellen. Die Spannung und das Massepotential GND können über die Schnittstellenanordnung 40 der erfindungsgemäßen Anordnung 10 zur Verfügung gestellt werden. Hierzu kann die Stabilisierungsvorrichtung 20 elektrisch über den Eingang 21 und über die Schnittstellenanordnung 40 mit der Energieversorgungsleitung 41 verbunden sein. Auf diese Weise kann eine Eingangsspannung Ue von der Versorgungsverbindung am Eingang 21 bereitgestellt werden, welche dann durch die Stabilisierungsvorrichtung 20 in eine stabilisierte Ausgangsspannung Ua für die Energieversorgung der Verarbeitungsanordnung 50 am Ausgang 22 übertragen wird. Zudem ermöglicht es die Funktionalität der Stabilisierungsvorrichtung 20, dass definiert durch den elektrischen Ausgangsstrom Iplc am Ausgang 22 ein für das Übertragungssignal S spezifischer elektrischen Strom am Eingang 21 bereitgestellt wird. Hierzu ist die Stabilisierungsvorrichtung 20 z. B. als Regler, insbesondere Spannungsregler ausgeführt.

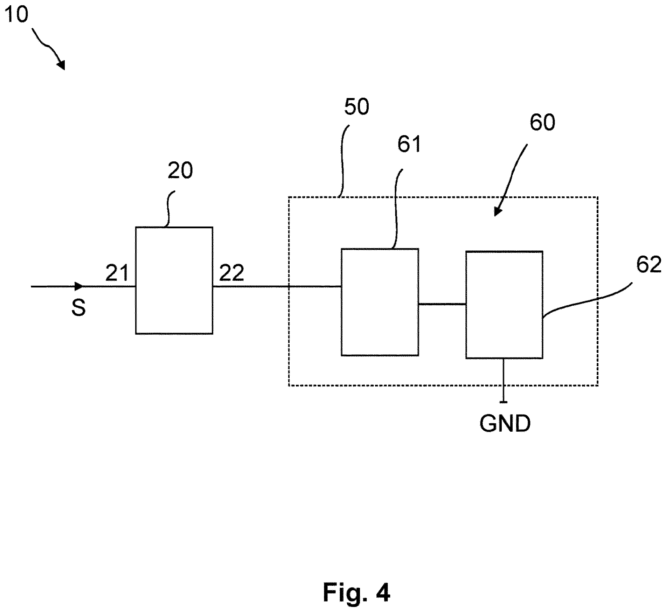

Wie in Figur 3 und 4 gezeigt ist, kann die Stromkontrollanordnung 60 wenigstens eine Verarbeitungsvorrichtung 61 und eine Anpassungsanordnung 62, insbesondere Widerstandsanordnung 62, aufweisen, um initiiert durch die Verarbeitungsvorrichtung 61 den Ausgang 22 elektrisch über die Anpassungsanordnung 62 mit einem Referenzpotential GND zu verbinden. Dies ermöglicht es, den elektrischen Ausgangsstrom Iplc definiert anhand der Anpassungsanordnung 62 und der Ausgangsspannung bereitzustellen, sodass die Stabilisierungsvorrichtung 20 definiert durch diesen elektrischen Ausgangsstrom Iplc das Übertragungssignal S am Eingang 21 für die Schnittstellenanordnung 40 ausgibt. Dabei kann, wie durch Figur 3 veranschaulicht ist, der Ausgang 22 über die Anpassungsanordnung 62 mit der Verarbeitungsvorrichtung 61 und darüber mit dem Referenzpotential GND verbunden sein. Auch ist es denkbar, dass gemäß Figur 4 der Ausgang 22 über die Verarbeitungsvorrichtung 61 und dann über die Anpassungsanordnung 62 mit dem Referenzpotential GND verbunden ist.

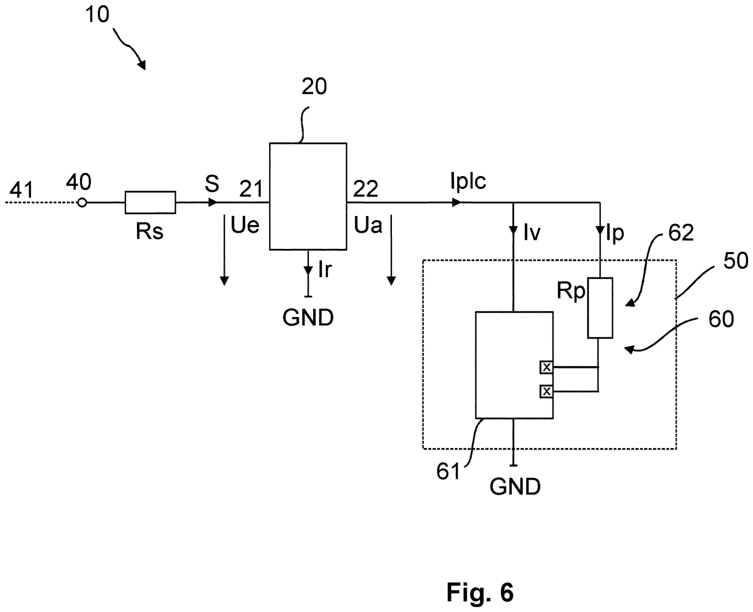

In Figur 5 und 6 ist dargestellt, dass die Stromkontrollanordnung 60 die Verarbeitungsvorrichtung 61 und die Anpassungsanordnung 62 in der Form einer Widerstandsanordnung 62 aufweist, bei welcher die Widerstandsanordnung 62 wenigstens einen Widerstand Rp aufweist, welcher (jeweils) in einen Strompfad 64 mit einem Schaltmittel 63 der Verarbeitungsvorrichtung 61 integriert ist, um geschaltet durch das Schaltmittel 63 das Übertragungssignal S zu definieren. In Figur 5 ist die Verarbeitungsvorrichtung 61 mit mindestens zwei Schaltmitteln 63 zu sehen, welche jeweils in einen Strompfad 64 mit einem jeweiligen Widerstand Rp der Anpassungsanordnung 62 integriert sind, um durch ein gemeinsames und insbesondere zeitgleiches Schalten der Schaltmittel 63 die Stabilisierungsvorrichtung 20 zur Ausgabe des Übertragungssignals S an die Schnittstellenanordnung 40 zu verwenden. Damit kann das Übertragungssignal S durch die Widerstände Rp gemeinsam definiert werden.

Außerdem ist in Figur 5 und 6 gezeigt, dass der Ausgang 22 der Stabilisierungsvorrichtung 20 elektrisch sowohl mit der Verarbeitungsvorrichtung 61 verbunden sein kann, um den Ausgangsstrom Iplc am Ausgang 22 zumindest teilweise für die Energieversorgung der Verarbeitungsvorrichtung 61 bereitzustellen, als auch mit der Anpassungsanordnung 62 und wenigstens einem Schaltmittel 63 der Stromkontrollanordnung 60 verbunden sein kann, um den Ausgangsstrom Iplc am Ausgang 22 definiert für die Übertragung der bereitgestellten Information anzupassen, um das Übertragungssignal S auszugeben. Die Energieversorgung kann dabei über einen Versorgungsstrom Iv bereitgestellt werden, welcher von dem Ausgangsstrom Iplc abgezweigt wird. Ferner kann der Ausgangsstrom Iplc der Stabilisierungsvorrichtung 20 ungefähr dem Eingangsstrom der Stabilisierungsvorrichtung 20 am Eingang 21 entsprechen (da der Stromverlust Ir durch die Stabilisierungsvorrichtung 20 sehr gering sein kann). Dieser Eingangsstrom kann dem Strom der Energieversorgungsleitung 41 entsprechen. Es können zwischen der Energieversorgungsleitung 41 und dem Eingang 21 ein Schutzwiderstand Rs oder weitere Schutzmittel vorgesehen sein, um die Anordnung 10 zu schützen.

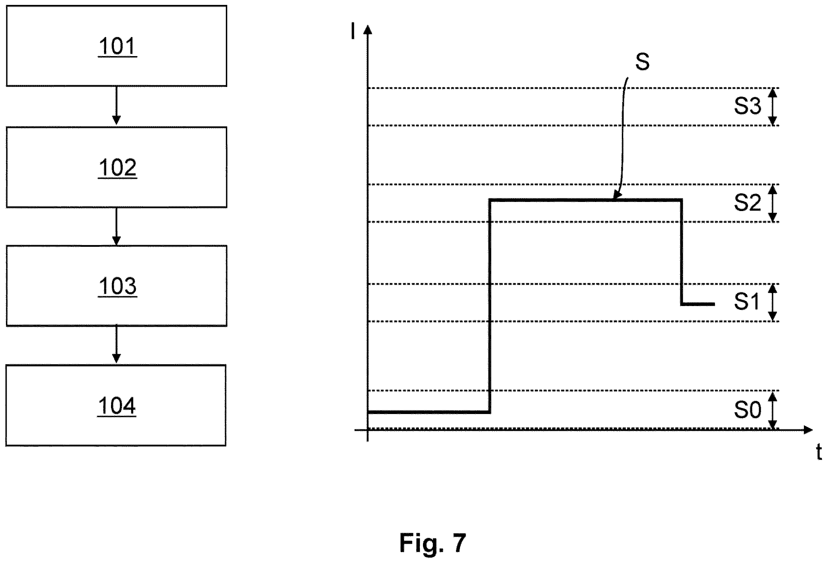

In Figur 7 ist ein erfindungsgemäßes Verfahren visualisiert. Dabei kann gemäß einem ersten Verfahrensschritt 101 eine Information bei der Komponente 2 durch eine Verarbeitungsanordnung 50 der Komponente 2 bestimmt werden. Dann kann gemäß einem zweiten Verfahrensschritt 102 ein Bereitstellen einer elektrischen Versorgungsverbindung von einer Steuervorrichtung 30 des Fahrzeuges 1 an eine Schnittstellenanordnung 40 der Komponente 2 durchgeführt werden. Anschließend kann gemäß einem dritten Verfahrensschritt 103 ein Stabilisieren einer Energieversorgung von der Versorgungsverbindung für die Verarbeitungsanordnung 50 durch eine Stabilisierungsvorrichtung 20 erfolgen, welche die Schnittstellenanordnung 40 mit der Verarbeitungsanordnung 50 elektrisch verbindet. Gemäß einem weiteren vierten Verfahrensschritt 104 erfolgt ein Verwenden, insbesondere Aktivieren und/oder Ansteuern, der Stabilisierungsvorrichtung 20 zur Ausgabe eines Übertragungssignals S an die Schnittstellenanordnung 40 und darüber an die Versorgungsverbindung durch eine Stromkontrollanordnung 60 der Verarbeitungsanordnung 50, welche hierzu mit der Stabilisierungsvorrichtung 20 elektrisch verbunden ist, um die Information über die Versorgungsverbindung an die Steuervorrichtung 30 zu übertragen.

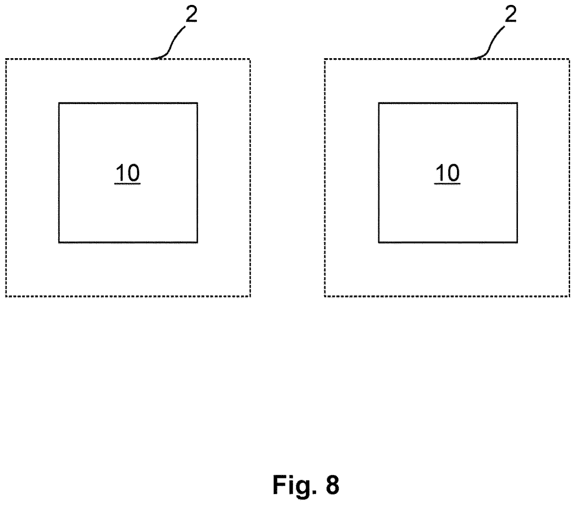

In Figur 8 ist ein erfindungsgemäßes System für ein Fahrzeug 1 gezeigt, welches wenigstens zwei Komponenten 2 aufweisen kann, insbesondere erfindungsgemäße Türgriffe 2, jeweils mit einer erfindungsgemäßen Anordnung 10. Wie auch in Figur 7 visualisiert ist, kann die jeweilige Stromkontrollanordnung 60 dabei dazu ausgeführt sein, die damit verbundene Stabilisierungsvorrichtung 20 zur Ausgabe des Übertragungssignals S mit einer jeweils für die Komponente 2 vorgegebene Stromstärke I (beispielhaft ausgewählt aus den Bereichen S1, S2 und S3) zu verwenden, wobei sich die Stromstärken I für verschiedene der Komponenten 2 voneinander unterscheiden, um die Übertragungssignale S der verschiedenen Komponenten 2 bei der Steuervorrichtung 30 voneinander zu unterscheiden.

Die Stromstärke I kann dabei einer Stromstärke I eines Stroms in der Energieversorgungsleitung 41 entsprechen.

In Figur 7 ist ferner ein beispielhafter Verlauf der Stromstärke I der Energieversorgungsleitung 41 und damit des Übertragungssignals S über die Zeit t dargestellt. Dabei kann ein erster Kommunikationsbereich S0 einen Stromstärkenbereich definiert, in welchem keinerlei Detektion indiziert wird (Ruhezustand, nur zur Energieversorgung). Ein zweiter Kommunikationsbereich S1 kann einen Stromstärkebereich definieren, in welchem durch das Übertragungssignal S eine Detektion bei einer ersten Komponente 2 indiziert wird. Ein dritter Kommunikationsbereich S2 kann einen Stromstärkebereich definieren, in welchem durch das Übertragungssignal S eine Detektion bei einer zweiten Komponente 2 indiziert wird. Ein vierter Kommunikationsbereich S3 kann einen Stromstärkebereich definieren, in welchem durch das Übertragungssignal S eine Detektion bei einer dritten Komponente 2 indiziert wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Komponente, Türgriff

- 10: Anordnung

- 20: Stabilisierungsvorrichtung, Spannungsregler
- 21: Eingang
- 22: Ausgang

- 30: Steuervorrichtung, Steuergerät

- 40: Schnittstellenanordnung
- 41: Energieversorgungsleitung
- 42: Masseleitung

- 50: Verarbeitungsanordnung

- 60: Stromkontrollanordnung
- 61: Verarbeitungsvorrichtung, Mikrocontroller
- 62: Widerstandsanordnung, Anpassungsanordnung
- 63: Schaltmittel
- 64: Strompfad

- Iplc: Gesamtstrom, Ausgangsstrom
- t: Zeit
- I: Stromstärke
- Ip: Übertragungsstrom
- Ir: Stromverlust Regler
- Iv: Versorgungsstrom
- GND: Referenzpotential, Massepotential
- Rp: Widerstand
- Rs: Schutzwiderstand
- S: Übertragungssignal
- S0: erster Kommunikationsbereich
- S1: zweiter Kommunikationsbereich
- S2: dritter Kommunikationsbereich
- S3: vierter Kommunikationsbereich
- Ue: Eingangsspannung
- Ua: Ausgangsspannung
- Ub: Batteriespannung

## Patentansprüche

1. Anordnung (10) zur Informationsübertragung bei einer Komponente (2) eines Fahrzeuges (1), insbesondere bei einem Türgriff (2) des Fahrzeuges (1), aufweisend:
- eine Verarbeitungsanordnung (50) zur Bereitstellung einer Information bei der Komponente (2), vorzugsweise über eine Detektion einer Aktivierungshandlung bei der Komponente (2),
- eine Schnittstellenanordnung (40) zur Bereitstellung einer elektrischen Versorgungsverbindung mit einer Steuervorrichtung (30) des Fahrzeuges (1),
- eine Stabilisierungsvorrichtung (20), welche die Schnittstellenanordnung (40) mit der Verarbeitungsanordnung (50) elektrisch verbindet, um eine Energieversorgung von der Versorgungsverbindung stabilisiert für die Verarbeitungsanordnung (50) bereitzustellen,
- eine Stromkontrollanordnung (60) der Verarbeitungsanordnung (50), welche mit der Stabilisierungsvorrichtung (20) elektrisch verbunden ist, um die Stabilisierungsvorrichtung (20) zur Ausgabe eines Übertragungssignals (S) an die Schnittstellenanordnung (40) zu verwenden, um die bereitgestellte Information über die Versorgungsverbindung an die Steuervorrichtung (30) zu übertragen,
**dadurch gekennzeichnet,**
**dass** die Stromkontrollanordnung (60) eine Anpassungsanordnung (62), insbesondere Widerstandsanordnung (62), und zumindest ein Schaltmittel (63) zum Schalten wenigstens eines elektrischen Stroms (Ip) zwischen einem Ausgang (22) der Stabilisierungsvorrichtung (20) und der Anpassungsanordnung (62) aufweist, um einen elektrischen Ausgangsstrom (Iplc) am Ausgang (22) angepasst durch die Anpassungsanordnung (62) bereitzustellen, sodass die Stabilisierungsvorrichtung (20) anhand dieses elektrischen Ausgangsstroms (Iplc) das Übertragungssignal (S) entsprechend angepasst über einen Eingang (21) an die Schnittstellenanordnung (40) ausgibt.

2. Anordnung (10) nach Anspruch 1,
**dadurch gekennzeichnet,**
**dass** die Stabilisierungsvorrichtung (20) als ein Spannungsregler (20) ausgeführt ist, und über einen Eingang (21) mit der Schnittstellenanordnung (40) und über einen Ausgang (22) mit der Verarbeitungsanordnung (50) verbunden ist, um eine Eingangsspannung von der Versorgungsverbindung am Eingang (21) in eine stabilisierte Ausgangsspannung für die Energieversorgung der Verarbeitungsanordnung (50) am Ausgang (22) zu übertragen.

3. Anordnung (10) nach einem der vorhergehenden Ansprüche,
**dadurch gekennzeichnet,**
**dass** die Stabilisierungsvorrichtung (20) über einen Eingang (21) mit der Schnittstellenanordnung (40) und über einen Ausgang (22) mit der Verarbeitungsanordnung (50) elektrisch verbunden ist, insbesondere um eine Eingangsspannung von der Versorgungsverbindung am Eingang (21) in eine stabilisierte Ausgangsspannung für die Energieversorgung der Verarbeitungsanordnung (50) am Ausgang (22) zu übertragen, und um definiert durch einen elektrischen Ausgangsstrom (Iplc) am Ausgang (22) einen für das Übertragungssignal (S) spezifischen elektrischen Strom am Eingang (21) bereitzustellen, wobei
die Stromkontrollanordnung (60) wenigstens eine Verarbeitungsvorrichtung (61) und eine Anpassungsanordnung (62), insbesondere Widerstandsanordnung (62), aufweist, um initiiert durch die Verarbeitungsvorrichtung (61) den Ausgang (22) elektrisch über die Anpassungsanordnung (62) mit einem Referenzpotential (GND) zu verbinden, um den elektrischen Ausgangsstrom (Iplc) definiert anhand der Anpassungsanordnung (62) und der Ausgangsspannung bereitzustellen, sodass die Stabilisierungsvorrichtung (20) definiert durch diesen elektrischen Ausgangsstrom (Iplc) das Übertragungssignal (S) am Eingang (21) für die Schnittstellenanordnung (40) ausgibt, sodass das Übertragungssignal (S) ebenfalls anhand der Anpassungsanordnung (62) und der Ausgangsspannung definiert ist.

4. Anordnung (10) nach einem der vorhergehenden Ansprüche,
**dadurch gekennzeichnet,**
**dass** die Stabilisierungsvorrichtung (20) dazu ausgeführt ist, aktiviert durch die Stromkontrollanordnung (60) über die Schnittstellenanordnung (40) das Übertragungssignal (S) für eine Powerline-Kommunikation an eine Energieversorgungsleitung (41) der Versorgungsverbindung auszugeben.

5. Anordnung (10) nach einem der vorhergehenden Ansprüche,
**dadurch gekennzeichnet,**
**dass** die Stabilisierungsvorrichtung (20) dazu ausgeführt ist, das Übertragungssignal (S) stabilisiert an einem Eingang (21) auszugeben, insbesondere gemäß der Stabilisierung der Energieversorgung, vorzugsweise der Stabilisierung einer Ausgangsspannung zur Energieversorgung der Verarbeitungsanordnung (50) an einem Ausgang (22) der Stabilisierungsvorrichtung (20).

6. Anordnung (10) nach einem der vorhergehenden Ansprüche,
**dadurch gekennzeichnet,**
**dass** die Stromkontrollanordnung (60) eine Verarbeitungsvorrichtung (61) und eine Anpassungsanordnung (62) in der Form einer Widerstandsanordnung (62) aufweist, wobei die Widerstandsanordnung (62) wenigstens einen Widerstand (Rp) aufweist, welcher in einen Strompfad (64) mit einem Schaltmittel (63) der Verarbeitungsvorrichtung (61) integriert ist, um geschaltet durch das Schaltmittel (63) das Übertragungssignal (S) zu definieren.

7. Anordnung (10) nach einem der vorhergehenden Ansprüche,
**dadurch gekennzeichnet,**
**dass** die Stromkontrollanordnung (60) eine Verarbeitungsvorrichtung (61) mit wenigstens einem Schaltmittel (63) aufweist, wobei das wenigstens eine Schaltmittel (63) mit der Stabilisierungsvorrichtung (20) verschaltet ist, um durch ein Schalten des Schaltmittels (63) die Stabilisierungsvorrichtung (20) zur Ausgabe des Übertragungssignals (S) an die Schnittstellenanordnung (40) zu verwenden, insbesondere zu aktivieren, wobei die Verarbeitungsvorrichtung (61) parallel zu dem wenigstens einen Schaltmittel (63) mit der Stabilisierungsvorrichtung (20) verschaltet ist, um durch die Energieversorgung betrieben zu werden.

8. Anordnung (10) nach einem der vorhergehenden Ansprüche,
**dadurch gekennzeichnet,**
**dass** die Stromkontrollanordnung (60) mindestens zwei Schaltmittel (63) aufweist, welche jeweils in einen Strompfad (64) mit einem jeweiligen Widerstand (Rp) einer Anpassungsanordnung (62) integriert sind, um durch ein gemeinsames und insbesondere zeitgleiches Schalten der Schaltmittel (63) die Stabilisierungsvorrichtung (20) zur Ausgabe des Übertragungssignals (S) an die Schnittstellenanordnung (40) zu verwenden, insbesondere zu aktivieren, um das Übertragungssignal (S) durch die Widerstände (Rp) gemeinsam zu definieren.

9. Anordnung (10) nach einem der vorhergehenden Ansprüche,
**dadurch gekennzeichnet,**
**dass** ein Ausgang (22) der Stabilisierungsvorrichtung (20) elektrisch verbunden ist
- mit einer Verarbeitungsvorrichtung (61) der Verarbeitungsanordnung (50), um einen Ausgangsstrom (Iplc) am Ausgang (22) zumindest teilweise für die Energieversorgung der Verarbeitungsvorrichtung (61) bereitzustellen, und auch
- mit einer Anpassungsanordnung (62) und wenigstens einem Schaltmittel (63) der Stromkontrollanordnung (60), um den Ausgangsstrom (Iplc) am Ausgang (22) definiert für die Übertragung der bereitgestellten Information anzupassen, um das Übertragungssignal (S) auszugeben.

10. Anordnung (10) nach einem der vorhergehenden Ansprüche,
**dadurch gekennzeichnet,**
**dass** die Stabilisierungsvorrichtung (20) dazu ausgeführt ist, einen elektrischen Strom (S) an einem Eingang (21) der Stabilisierungsvorrichtung (20) überwiegend als einen elektrischen Ausgangsstrom (Iplc) an einem Ausgang (22) der Stabilisierungsvorrichtung (20) bereitzustellen, sodass eine Anpassung des Ausgangsstroms (Iplc) durch die Stromkontrollanordnung (60) den Strom (S) am Eingang (21) überwiegend in gleicher Weise anpasst, sodass der Strom (S) das Übertragungssignal (S) bildet.

11. Anordnung (10) nach einem der vorhergehenden Ansprüche,
**dadurch gekennzeichnet,**
**dass** die Verarbeitungsanordnung (50) für die Bereitstellung und insbesondere Generierung der Information eine Verarbeitungsvorrichtung (61) aufweist, wobei die Verarbeitungsanordnung (50) dazu ausgeführt ist, bei der Ausgabe des Übertragungssignals (S) einen Energieverbrauch der Verarbeitungsvorrichtung (61) konstant zu halten, insbesondere eine Taktfrequenz der Verarbeitungsvorrichtung (61) konstant zu halten, um den Energieverbrauch der Verarbeitungsvorrichtung (61) zu stabilisieren, und außerhalb der Ausgabe die Taktfrequenz regelmäßig zu verringern, um den Energieverbrauch der Verarbeitungsvorrichtung (61) zu reduzieren.

12. Türgriff (2) für ein Fahrzeug (1) mit einer Anordnung (10) nach einem der vorhergehenden Ansprüche zur Informationsübertragung bei dem Türgriff (2) aufweisend:
- die Verarbeitungsanordnung (50) zur Bereitstellung einer Information bei dem Türgriff (2),
- die Schnittstellenanordnung (40) zur Bereitstellung einer elektrischen Versorgungsverbindung mit einer Steuervorrichtung (30) des Fahrzeuges (1),
- die Stabilisierungsvorrichtung (20), welche die Schnittstellenanordnung (40) mit der Verarbeitungsanordnung (50) elektrisch verbindet, um eine Energieversorgung von der Versorgungsverbindung stabilisiert für die Verarbeitungsanordnung (50) bereitzustellen,
- die Stromkontrollanordnung (60) der Verarbeitungsanordnung (50), welche mit der Stabilisierungsvorrichtung (20) elektrisch verbunden ist, um die Stabilisierungsvorrichtung (20) zur Ausgabe eines Übertragungssignals (S) an die Schnittstellenanordnung (40) zu verwenden, um die bereitgestellte Information über die Versorgungsverbindung an die Steuervorrichtung (30) zu übertragen.

13. System für ein Fahrzeug (1), aufweisend wenigstens zwei Komponenten (2),
insbesondere Türgriffe (2) nach dem vorhergehenden Anspruch, jeweils mit einer Anordnung (10) nach einem der Ansprüche 1 bis 11,
wobei die jeweilige Stromkontrollanordnung (60) dazu ausgeführt ist, die damit verbundene Stabilisierungsvorrichtung (20) zur Ausgabe des Übertragungssignals (S) mit einer jeweils für die Komponente (2) vorgegebene Stromstärke (I) zu verwenden,
wobei sich die Stromstärken (I) für verschiedene der Komponenten (2) voneinander unterscheiden, um die Übertragungssignale (S) der verschiedenen Komponenten (2) bei der Steuervorrichtung (30) voneinander zu unterscheiden.

14. Verfahren zur Informationsübertragung bei einer Komponente (2) eines Fahrzeuges (1) durch eine Anordnung (10) nach einem der Ansprüche 1 bis 11,
**wobei die nachfolgenden Schritte durchgeführt werden:**
- Bestimmen einer Information bei der Komponente (2) durch die Verarbeitungsanordnung (50) der Anordnung (10)
- Bereitstellen einer elektrischen Versorgungsverbindung von einer Steuervorrichtung (30) des Fahrzeuges (1) an die Schnittstellenanordnung (40) der Anordnung (10),
- Stabilisieren einer Energieversorgung von der Versorgungsverbindung für die Verarbeitungsanordnung (50) durch die Stabilisierungsvorrichtung (20), welche die Schnittstellenanordnung (40) mit der Verarbeitungsanordnung (50) elektrisch verbindet,
- Verwenden der Stabilisierungsvorrichtung (20) zur Ausgabe eines Übertragungssignals (S) an die Schnittstellenanordnung (40) und darüber an die Versorgungsverbindung durch die Stromkontrollanordnung (60) der Verarbeitungsanordnung (50), welche hierzu mit der Stabilisierungsvorrichtung (20) elektrisch verbunden ist, um die Information über die Versorgungsverbindung an die Steuervorrichtung (30) zu übertragen.

## Claims

1. Arrangement (10) for transmitting information in a component (2) of a vehicle (1), in particular in a door handle (2) of the vehicle (1):
- a processing arrangement (50) for providing information at the component (2), preferably via a detection of an activation action at the component (2),
- an interface arrangement (40) for providing an electrical supply connection with a control device (30) of the vehicle (1),
- a stabilizing device (20) electrically connecting the interface arrangement (40) to the processing arrangement (50) to provide a power supply stabilized from the supply connection to the processing arrangement (50),
- a current control arrangement (60) of the processing arrangement (50) which is electrically connected to the stabilizing device (20) to use the stabilizing device (20) to output a transmission signal (S) to the interface arrangement (40) to transmit the provided information to the control device (30) via the supply connection,
**characterized in that**
the current control arrangement (60) has a matching arrangement (62), in particular a resistor arrangement (62), and at least one switching means (63) for switching at least one electrical current (Ip) between an output (22) of the stabilizing device (20) and the matching arrangement (62), in order to provide an electrical output current (Iplc) at the output (22) adapted by the matching arrangement (62), so that the stabilization device (20) outputs the transmission signal (S) adapted accordingly via an input (21) to the interface arrangement (40) on the basis of this electrical output current (Iplc).

2. Arrangement (10) according to claim 1,
**characterized in that**
the stabilizing device (20) is designed as a voltage regulator (20) and is connected via an input (21) to the interface arrangement (40) and via an output (22) to the processing arrangement (50) in order to transfer an input voltage from the supply connection at the input (21) into a stabilized output voltage for the power supply of the processing arrangement (50) at the output (22).

3. Arrangement (10) according to one of the preceding claims,
**characterized in that**
the stabilizing device (20) is electrically connected via an input (21) to the interface arrangement (40) and via an output (22) to the processing arrangement (50), in particular in order to transmit an input voltage from the supply connection at the input (21) into a stabilized output voltage for the power supply of the processing arrangement (50) at the output (22), and in order to provide, defined by an electrical output current (Iplc) at the output (22), an electrical current specific to the transmission signal (S) at the input (21), wherein
the current control arrangement (60) has at least one processing device (61) and a matching arrangement (62), in particular a resistor arrangement (62), in order, initiated by the processing device (61), to connect the output (22) electrically to a reference potential (GND) via the matching arrangement (62), to provide the electrical output current (Iplc) defined on the basis of the matching arrangement (62) and the output voltage, so that the stabilization device (20) outputs the transmission signal (S) defined by this electrical output current (Iplc) at the input (21) for the interface arrangement (40), so that the transmission signal (S) is also defined on the basis of the matching arrangement (62) and the output voltage.

4. Arrangement (10) according to one of the preceding claims,
**characterized in that**
the stabilizing device (20) is designed to output the transmission signal (S) for powerline communication to a power supply line (41) of the supply connection via the interface arrangement (40) when activated by the current control arrangement (60).

5. Arrangement (10) according to one of the preceding claims,
**characterized in that**
the stabilizing device (20) is designed to output the transmission signal (S) in a stabilized manner at an input (21), in particular in accordance with the stabilization of the power supply, preferably the stabilization of an output voltage for supplying power to the processing arrangement (50) at an output (22) of the stabilizing device (20).

6. Arrangement (10) according to one of the preceding claims,
**characterized in that**
the current control arrangement (60) comprises a processing device (61) and a matching arrangement (62) in the form of a resistor arrangement (62), the resistor arrangement (62) comprising at least one resistor (Rp) which is integrated in a current path (64) with a switching means (63) of the processing device (61) in order to define the transmission signal (S) when switched by the switching means (63).

7. Arrangement (10) according to one of the preceding claims,
**characterized in that**
the current control arrangement (60) has a processing device (61) with at least one switching means (63), the at least one switching means (63) being connected to the stabilizing device (20) in order to use, in particular to activate, the stabilizing device (20) for outputting the transmission signal (S) to the interface arrangement (40) by switching the switching means (63), the processing device (61) being connected in parallel with the at least one switching means (63) to the stabilizing device (20) in order to be operated by the power supply.

8. Arrangement (10) according to one of the preceding claims,
**characterized in that**
the current control arrangement (60) has at least two switching means (63) which are each integrated in a current path (64) with a respective resistor (Rp) of a matching arrangement (62) in order to use the stabilizing device (20) to output the transmission signal (S) to the interface arrangement (40), in particular to activate the transmission signal (S) through the resistors (Rp) in order to jointly define the transmission signal (S), by switching the switching means (63) together and in particular simultaneously.

9. Arrangement (10) according to one of the preceding claims,
**characterized in that**
an output (22) of the stabilizing device (20) is electrically connected
- with a processing device (61) of the processing arrangement (50) to provide an output current (Iplc) at the output (22) at least partly for the power supply of the processing device (61), and also
- to an matching arrangement (62) and at least one switching means (63) of the current control arrangement (60) for adapting the output current (Iplc) at the output (22) in a defined manner for the transmission of the information provided in order to output the transmission signal (S).

10. Arrangement (10) according to one of the preceding claims,
**characterized in that**
the stabilizing device (20) is designed to provide an electrical current (S) at an input (21) of the stabilizing device (20) predominantly as an electrical output current (Iplc) at an output (22) of the stabilizing device (20), so that an adjustment of the output current (Iplc) by the current control arrangement (60) adjusts the current (S) at the input (21) predominantly in the same way, so that the current (S) forms the transmission signal (S).

11. Arrangement (10) according to one of the preceding claims,
**characterized in that**
the processing arrangement (50) has a processing device (61) for the provision and in particular generation of the information, the processing arrangement (50) being designed to keep an energy consumption of the processing device (61) constant during the output of the transmission signal (S), in particular to keep a clock frequency of the processing device (61) constant in order to stabilize the energy consumption of the processing device (61), and to regularly reduce the clock frequency outside the output in order to reduce the energy consumption of the processing device (61).

12. Door handle (2) for a vehicle (1) with an arrangement (10) according to one of the preceding claims for transmitting information at the door handle (2) comprising:
- the processing arrangement (50) for providing information at the door handle (2),
- the interface arrangement (40) for providing an electrical supply connection with a control device (30) of the vehicle (1),
- the stabilizing device (20) electrically connecting the interface arrangement (40) to the processing arrangement (50) to provide a power supply stabilized from the supply connection to the processing arrangement (50),
- the current control arrangement (60) of the processing arrangement (50) which is electrically connected to the stabilizing device (20) to use the stabilizing device (20) to output a transmission signal (S) to the interface arrangement (40) to transmit the provided information to the control device (30) via the supply connection.

13. System for a vehicle (1), comprising at least two components (2), in particular door handles (2) according to the preceding claim, each with an arrangement (10) according to one of the claims 1 to 11,
wherein the respective current control arrangement (60) is adapted to use the stabilizing device (20) connected thereto to output the transmission signal (S) with a respective current intensity (I) predetermined for the component (2), wherein the current intensities (I) for different ones of the components (2) differ from each other in order to distinguish the transmission signals (S) of the different components (2) from each other at the control device (30).

14. Method for transmitting information in a component (2) of a vehicle (1) by means of an arrangement (10) according to one of the claims 1 to 11,
**whereby the following steps are carried out:**
- Determining information in the component (2) by the processing arrangement (50) of the arrangement (10),
- Providing an electrical supply connection from a control device (30) of the vehicle (1) to the interface arrangement (40) of the arrangement (10),
- Stabilizing a power supply from the supply connection for the processing arrangement (50) by the stabilizing device (20) electrically connecting the interface arrangement (40) to the processing arrangement (50),
- Using the stabilizing device (20) to output a transmission signal (S) to the interface arrangement (40) and via it to the supply connection through the current control arrangement (60) of the processing arrangement (50), which is electrically connected to the stabilizing device (20) for this purpose, in order to transmit the information via the supply connection to the control device (30).

## Revendications

1. Dispositif (10) pour la transmission d'informations sur un composant (2) d'un véhicule (1), présentant en particulier une poignée de porte (2) du véhicule (1) :
- un agencement de traitement (50) pour fournir une information au niveau du composant (2), de préférence via une détection d'une action d'activation au niveau du composant (2),
- un agencement d'interface (40) pour fournir une connexion d'alimentation électrique avec un dispositif de commande (30) du véhicule (1),
- un dispositif de stabilisation (20) qui connecte électriquement l'agencement d'interface (40) à l'agencement de traitement (50) afin de fournir une alimentation en énergie stabilisée à partir de la connexion d'alimentation à l'agencement de traitement (50),
- un agencement de contrôle de courant (60) de l'agencement de traitement (50) qui est connecté électriquement au dispositif de stabilisation (20) pour utiliser le dispositif de stabilisation (20) afin d'émettre un signal de transmission (S) vers l'agencement d'interface (40) afin de transmettre les informations fournies au dispositif de commande (30) par l'intermédiaire de la connexion d'alimentation,
**caractérisé en ce que**
l'agencement de contrôle de courant (60) présente un dispositif d'adaptation (62), en particulier un dispositif de résistance (62), et au moins un moyen de commutation (63) pour commuter au moins un courant électrique (Ip) entre une sortie (22) du dispositif de stabilisation (20) et le dispositif d'adaptation (62), pour fournir un courant électrique de sortie (Iplc) à la sortie (22) adapté par le dispositif d'adaptation (62), de sorte que le dispositif de stabilisation (20) délivre le signal de transmission (S) adapté en conséquence à l'aide de ce courant électrique de sortie (Iplc) via une entrée (21) au agencement d'interface (40).

2. Dispositif (10) selon la revendication 1,
**caractérisé en ce que**
le dispositif de stabilisation (20) est réalisé sous la forme d'un régulateur de tension (20), et est relié par une entrée (21) à l'agencement d'interface (40) et par une sortie (22) à l'agencement de traitement (50), afin de transférer une tension d'entrée de la liaison d'alimentation à l'entrée (21) en une tension de sortie stabilisée pour l'alimentation en énergie de l'agencement de traitement (50) à la sortie (22).

3. Dispositif (10) selon l'une quelconque des revendications précédentes,
**caractérisé en ce que**
le dispositif de stabilisation (20) est relié électriquement par une entrée (21) à l'agencement d'interface (40) et par une sortie (22) à l'agencement de traitement (50), en particulier pour transmettre une tension d'entrée de la liaison d'alimentation à l'entrée (21) en une tension de sortie stabilisée pour l'alimentation en énergie à l'agencement de traitement (50) à la sortie (22), et pour fournir, défini par un courant électrique de sortie (Iplc) à la sortie (22), un courant électrique à l'entrée (21) spécifique pour le signal de transmission (S), où
l'agencement de contrôle de courant (60) comprend au moins un dispositif de traitement (61) et un dispositif d'adaptation (62), en particulier un dispositif de résistance (62), pour relier électriquement la sortie (22) à un potentiel de référence (GND) via le dispositif d'adaptation (62), initié par le dispositif de traitement (61), pour fournir le courant électrique de sortie (Iplc) défini à l'aide du dispositif d'adaptation (62) et de la tension de sortie, de sorte que le dispositif de stabilisation (20) délivre le signal de transmission (S) défini par ce courant électrique de sortie (Iplc) à l'entrée (21) pour à l'agencement d'interface (40), de sorte que le signal de transmission (S) est également défini à l'aide du dispositif d'adaptation (62) et de la tension de sortie.

4. Dispositif (10) selon l'une quelconque des revendications précédentes,
**caractérisé en ce que**
le dispositif de stabilisation (20) est conçu pour émettre, activé par à l'agencement de contrôle de courant (60) via à l'agencement d'interface (40), le signal de transmission (S) pour une communication par courant porteur en ligne vers une ligne d'alimentation en énergie (41) de la connexion d'alimentation.

5. Dispositif (10) selon l'une quelconque des revendications précédentes,
**caractérisé en ce que**
le dispositif de stabilisation (20) est conçu pour délivrer le signal de transmission (S) stabilisé à une entrée (21), notamment selon la stabilisation de l'alimentation en énergie, de préférence la stabilisation d'une tension de sortie pour l'alimentation en énergie de à l'agencement de traitement (50) à une sortie (22) du dispositif de stabilisation (20).

6. Dispositif (10) selon l'une quelconque des revendications précédentes,
**caractérisé en ce que**
l'agencement de contrôle de courant (60) comprend un dispositif de traitement (61) et un agencement d'adaptation (62) sous la forme d'un agencement de résistance (62), l'agencement de résistance (62) comprenant au moins une résistance (Rp) qui est intégrée dans un trajet de courant (64) avec un moyen de commutation (63) du dispositif de traitement (61) pour définir, par commutation par le moyen de commutation (63), le signal de transmission (S).

7. Dispositif (10) selon l'une quelconque des revendications précédentes,
**caractérisé en ce que**
l'agencement de contrôle de courant (60) comprend un dispositif de traitement (61) avec au moins un moyen de commutation (63), ledit au moins un moyen de commutation (63) étant connecté au dispositif de stabilisation (20) pour utiliser, en particulier pour activer, par une commutation du moyen de commutation (63), le dispositif de stabilisation (20) pour délivrer le signal de transmission (S) à l'agencement d'interface (40), le dispositif de traitement (61) étant connecté en parallèle avec ledit au moins un moyen de commutation (63) au dispositif de stabilisation (20) pour être actionné par l'alimentation électrique.

8. Dispositif (10) selon l'une quelconque des revendications précédentes,
**caractérisé en ce que**
l'agencement de contrôle de courant (60) comporte au moins deux moyens de commutation (63) qui sont intégrés chacun dans un trajet de courant (64) avec une résistance respective (Rp) d'un dispositif d'adaptation (62), afin d'utiliser, en particulier d'activer, par une commutation commune et en particulier simultanée des moyens de commutation (63), le dispositif de stabilisation (20) pour la sortie du signal de transmission (S) vers l'agencement d'interface (40), afin de définir conjointement le signal de transmission (S) par les résistances (Rp).

9. Dispositif (10) selon l'une quelconque des revendications précédentes,
**caractérisé en ce qu'**
une sortie (22) du dispositif de stabilisation (20) est reliée électriquement
- avec un dispositif de traitement (61) de à l'agencement de traitement (50), pour fournir un courant de sortie (Iplc) à la sortie (22) au moins partiellement pour l'alimentation en énergie du dispositif de traitement (61), et également
- avec un dispositif d'adaptation (62) et au moins un moyen de commutation (63) de l'agencement de contrôle de courant (60) pour adapter le courant de sortie (Iplc) à la sortie (22) de manière définie pour la transmission des informations fournies afin de délivrer le signal de transmission (S).

10. Dispositif (10) selon l'une quelconque des revendications précédentes,
**caractérisé en ce que**
le dispositif de stabilisation (20) est conçu pour fournir un courant électrique (S) à une entrée (21) du dispositif de stabilisation (20) principalement comme un courant électrique de sortie (Iplc) à une sortie (22) du dispositif de stabilisation (20), de sorte qu'une adaptation du courant de sortie (Iplc) par l'agencement de contrôle de courant (60) adapte le courant (S) à l'entrée (21) principalement de la même manière, de sorte que le courant (S) forme le signal de transmission (S).

11. Dispositif (10) selon l'une quelconque des revendications précédentes,
**caractérisé en ce que**
l'agencement de traitement (50) comporte un dispositif de traitement (61) pour la mise à disposition et notamment la génération de l'information, l'agencement de traitement (50) étant conçu pour maintenir constante une consommation d'énergie du dispositif de traitement (61) lors de l'émission du signal de transmission (S), notamment pour maintenir constante une fréquence d'horloge du dispositif de traitement (61) afin de stabiliser la consommation d'énergie du dispositif de traitement (61), et pour diminuer régulièrement la fréquence d'horloge en dehors de l'émission afin de réduire la consommation d'énergie du dispositif de traitement (61).

12. Poignée de porte (2) pour un véhicule (1) avec un dispositif (10) selon l'une des revendications précédentes pour la transmission d'informations au niveau de la poignée de porte (2)
présentant :
- l'agencement de traitement (50) pour fournir une information au niveau de la poignée de porte (2),
- l'agencement d'interface (40) pour fournir une connexion d'alimentation électrique à un dispositif de commande (30) du véhicule (1),
- le dispositif de stabilisation (20) qui connecte électriquement l'agencement d'interface (40) à l'agencement de traitement (50) pour fournir une alimentation en énergie stabilisée à partir de la connexion d'alimentation à l'agencement de traitement (50),
- l'agencement de contrôle de courant (60) de l'agencement de traitement (50), qui est connecté électriquement au dispositif de stabilisation (20), pour utiliser le dispositif de stabilisation (20) afin d'émettre un signal de transmission (S) vers l'agencement d'interface (40) afin de transmettre les informations fournies au dispositif de commande (30) via la connexion d'alimentation.

13. Système pour un véhicule (1), comprenant au moins deux composants (2), en particulier des poignées de porte (2) selon la revendication précédente, chacun avec un dispositif (10) selon l'une des revendications 1 à 11 du site,
dans lequel l'agencement de contrôle de courant respectif (60) est adapté pour utiliser le dispositif de stabilisation (20) qui lui est connecté pour émettre le signal de transmission (S) avec une intensité de courant (I) prédéterminée respectivement pour le composant (2), les intensités de courant (I) étant différentes les unes des autres pour différents des composants (2) afin de distinguer les uns des autres les signaux de transmission (S) des différents composants (2) au niveau du dispositif de commande (30).

14. Procédé de transmission d'informations dans un composant (2) d'un véhicule (1) par un dispositif (10) selon l'une des revendications 1 à 11,
**où les étapes suivantes sont effectuées:**
- La détermination d'une information au niveau du composant (2) par l'agencement de traitement (50) du dispositif (10),
- Fournir une connexion d'alimentation électrique d'un dispositif de commande (30) du véhicule (1) à l'agencement d'interface (40) du dispositif (10),
- Stabiliser une alimentation en énergie provenant de la connexion d'alimentation pour l'agencement de traitement (50) par le dispositif de stabilisation (20) qui connecte électriquement l'agencement d'interface (40) à l'agencement de traitement (50),
- Utiliser le dispositif de stabilisation (20) pour émettre un signal de transmission (S) vers l'agencement d'interface (40) et, par l'intermédiaire de celui-ci, vers la connexion d'alimentation par l'agencement de contrôle de courant (60) de l'agencement de traitement (50), qui est connecté électriquement au dispositif de stabilisation (20) à cet effet, afin de transmettre l'information sur la connexion d'alimentation au dispositif de commande (30).
